# EUROPÄISCHE PATENTSCHRIFT

(11) **EP 0 776 920 B1**
(45) Veröffentlichungstag und Bekanntmachung des Hinweises auf die Patenterteilung: **14.04.2004**
(21) Anmeldenummer: 96119157.4
(22) Anmeldetag: 29.11.1996
(51) Int. Cl.: C08G 18/40, C09D 175/06

(54) **Bindemittel auf Polyester-Acrylatbasis, Verfahren zu dessen Herstellung und seine Verwendung**
Polyester-acrylate based binder, process for its preparation and its use
Liant à base de polyester-acrylate, procédé pour sa préparation et son utilisation

(30) Priorität: 01.12.1995 DE 19544737
(43) Veröffentlichungstag der Anmeldung: 04.06.1997
(73) Patentinhaber: SYNTHOPOL CHEMIE Dr. rer. pol. Koch GmbH & CO. KG, 21614 Buxtehude (DE)
(72) Erfinder: Dos Santos, Antonio Manuel, 21614 Buxtehude (DE)
(74) Vertreter: Schupfner, Georg U.

(56) Entgegenhaltungen:
- EP-A- 0 036 975
- EP-A- 0 129 813
- WO-A-92/02590
- DE-A- 3 826 693
- GB-A- 2 254 328

## Beschreibung

Die Erfindung betrifft Bindemittel auf Polyester-Acrylatbasis, Verfahren zu dessen Herstellung und seine Verwendung.

Polyester-Acrylat-Bindemittel sind handelsüblich. Die Hersteller empfehlen, diese Bindemittel für die Herstellung von Decklacken zu verwenden, die auch den Zusatz mindestens einer Härtungskomponente, wie Polyisocyanate, erfordern. Derartige Lacke werden als lufttrocknende Autoreparatur-Lacke eingesetzt. Der ausgehärtete Lackfilm ist hart, zähelastisch, hochglänzend, füllkräftig und besitzt gute Lösungsmittel- und Benzinbeständigkeit.

Klarlacke, die aus einer Mischung von Arylatharzen mit Polyesterharzen und weiteren Harzen bestehen, sind bekannt. Solche Polymerblends, die als Bindemittel für Lacke eingesetzt werden, sind beispielsweise in der EP 0 036 975 A für Metalleffektlackierungen beschrieben. Auch die GB 2 254 328 A offenbart Mischungen von Polestem mit Polyacrylatcopolmeren. Gemische aus Polyhydroxyacrylatharzen und Polyesterpolyolen sind auch in der EP 0 129 813 A beschrieben.

Aus der WO 92/02590 sind Polyesteracrylatharze bekannt, die aus einem Polyester mit einer OH-Zahl von 0 bis 200 mg KOH/g und Säurezahlen von 0 bis 200 mg KOH/g und einem Polyacrylat mit einer OH-Zahl von 30 bis 250 mg KOH/g und einer Säurezahl von 0 bis 50 mg KOH/g bestehen. Die Polyesteracrylate enthalten in der Acrylatkomponente stets mindestens einen Vinylester einer gesättigten aliphatischen Monocarbonsäure mit 9 bis 11 C-Atomen, die am α-Atom verzweigt ist.

Die Aufgabe der Erfindung ist es, ein Bindemittel, welches mit Di- und/oder Polyisocyanaten aushärtbar ist, für Grundierungen und Füller zur Verfügung zu stellen. Ferner soll das Bindemittel der Erfindung auch zur Herstellung von Reaktionslacken für Metalle, Hölzer, Papier, Pappe, Glas sowie Kunststoffformteilen geeignet sein. Hierbei soll das Ausgangs-Polyester-Acrylat-Harz in organischen Lösungsmitteln, gelöst mit hohem Festkörper ("high-solid"-Harz) bei sehr niedriger Viskosität, vorliegen. Brauchbare Hydroxylzahlen für das Bindemittel der Erfindung liegen im Bereich von 40 bis 300 mg KOH/g Festharz, bevorzugt 50 bis 250 mg KOH/g Festharz, und die Säurezahlen im Bereich von 3 bis 20 mg KOH/g Festharz. Außerdem sollen die Überzüge der Beschichtungsmittel auf Basis der Polyester-Acrylatharze als Bindemittel und Diund/oder Polyisocyanaten als Vernetzungsmittel und Härter sehr rasche Lufttrocknung, gute Haftung auf allen Untergründen besitzen, möglichst wenig organische Lösungsmittel enthalten, damit nur echt umweltfreundliche Beschichtungsmittel zur Verfügung stehen. Ferner wird Korrosionsbeständigkeit der ausgehärteten Grundierung gefordert. Die zu verarbeitenden Beschichtungsmittel der vorstehend erläuterten Art müssen mindestens eine Topfzeit von 2 Stunden haben.

Die vorstehenden Aufgaben der Erfindung wurden gemäß den Patentansprüchen 1 bis 5 gelöst durch das derart charakterisierte Bindemittel auf Polyester-Acrylatbasis. Ein Verfahren zu deren Herstellung ist Gegenstand des Anspruchs 6, die Verwendung Gegenstand der Ansprüche 7 bis 10. Das Vorprodukt der Polyester ist in den Ansprüchen 11 und charakterisiert.

Gegenstand der Erfindung ist ein Bindemittel auf Polyester-Acrylatbasis,
- mit Hydroxylzahlen im Bereich von 40 bis 300 mg KOH/g Festharz und
- Säurezahlen im Bereich von 3 bis 20 mg KOH/g Festharz, aufgebaut aus

**A.** 10 bis 90 Gew.-% Polyester mit Hydroxylzahlen zwischen 80 bis 300 mg KOH/g Festharz und Säurezahlen zwischen 5 bis 30 mg KOH/g Festharz und berechneten Molmassen von 500 bis 15000, aus
   **a.1)** 5 bis 50 Mol.-% Neopentylglykol,
   **a.2)** 5 bis 45 Mol.-% Trimethylolpropan,
   **a.3)** 10 bis 51,5 Mol.-% Hexahydrophthalsäure und/oder Methylhexahydrophthalsäure und/oder deren Anhydrid(en),
   **a.4)** 0,5 bis 32 Mol.-% Phthalsäure und/oder deren Anhydrid,
   **a.5)** 0 bis 18 Mol.-% anderen Alkandiolen aus der Gruppe, 1,2- (1,3-, 1,4-) Butandiol, 1,5-Pentandiol, 1,6-Hexandiol, Cyclohexan-1,4-dimethanol, Hydroxypivalinsäureneopentylester, Cyclohexandiol, Trimethylpentandiol, Ethylbutylpropandiol, Ethylenglykol, Diethylenglykol, Triethylenglykol, 1 ,2-Propylenglykol, Dipropylenglykol, Hexylenglykol, einzeln oder im Gemisch,
   **a.6)** 0 bis 18 Mol.-% anderen Dicarbonsäuren und/oder Hydroxydicarbonsäuren und/oder deren Anhydrid und/oder aus der Gruppe Hydroxyisophthalsäure, Isophthalsäure, Terephthalsäure, Halogensäuren, wie Tetrachlor- bzw. Tetrabromphthalsäure, Tetrahydrophthalsäure, 1 ,2-Cyclohexandicarbonsäure, 1 ,4-Cyclohexandicarbonsäure, 4-Methylhexahydrophthalsäure, Endomethylentetrahydrophthalsäure, Tricyclodecan-Dicarbonsäure, Endoethylenhexahydrophthalsäure, Camphersäure (1,2,2-Trimethylcyclopentan-1,3-dicarbonsäure), Adipinsäure, Bernsteinsäure, Azelainsäure, Sebacinsäure, Glutarsäure, einzeln oder im Gemisch,
   **a.7)** 0 bis 16 Mol.-% Monocarbonsäuren oder/und Hydroxycarbonsäuren aus der Gruppe Benzoesäure, p. tert.-Butylbenzoesäure, Laurinsäure, Isononansäure, 2,2-Dimethylpropionsäure, 2-Ethylhexansäure, Capronsäure, Caprylsäure, Caprinsäure, Versaticsäure, Hexahydrobenzoesäure, Hydroxypivalinsäure, 3-(4-)Hydroxybenzoesäure, 2-Hydroxyisobuttersäure, 2-,(3-,4-,2-)Hydroxy-3-(4-,3-,4)-methoxybenzoesäure, 2-(3-)Hydroxy-4-(4-) methylbenzoesäure, 2-(3-, 4-)Hydrophenylaceticsäure, 2-Hydroxy-2-phenylpropionsäure, 3-(4-)Hydroxy-3-(3-)phenylpropionsäure, einzeln oder im Gemisch, **a.8)** 0 bis 14 Mol.-% aliphatischen und/oder cycloaliphatischen Monoalkoholen, wobei die Monoalkohole 4 bis 18 C-Atome besitzen, einzeln oder im Gemisch,
      wobei die sich unter a.1), a.2), a.3) und a.4), gegebenenfalls a.5), a.6), a.7) und a.8) angegebenen Mol.-% Angaben jeweils zu 100 Mol.-% ergänzen, und
B. 90 bis 10 Gew.-% Acrylatharz aus
   b.1) 5 bis 55 Gew.-% Hydroxyalkyl(meth)acrylat mit 2 bis 5 C-Atomen im Hydroxyalkylrest, einzeln oder im Gemisch, b.2) 0 bis 80 Gew.-% aromatischen Vinylverbindungen, einzeln oder im Gemisch, b.3) 0 bis 95 Gew.-% Alkyl(meth)acrylaten mit 1 bis 9 C-Atomen im Alkylrest, einzeln oder im Gemisch, b.4) 0,0 bis 6 Gew.-% (Meth)acrylsäure, einzeln oder im Gemisch,
wobei sich b.1), gegebenenfalls b.2), b.3) und/oder b.4) zu 100 Gew.-% ergänzen
und die Bindemittel herstellbar sind durch Polymerisation der die Acrylatkomponente bildenden Monomere in Anwesenheit der Polyesterkomponente.

Die vorstehende Zusammensetzung der Acrylatharzkomponente B verdeutlicht die Ausführungsform 1 für Acrylatharzkomponente B.

Eine weitere Ausführungsform des Bindemittels auf Polyester-Acrylatbasis, ist aufgebaut aus:
A. 10 bis 90 Gew.-% Polyester aus
   a.1) 5 bis 63 Mol.-% Neopentylglykol,
   a.2) größer 0 bis 45 Mol.-% Trimethylolpropan,
   a.3) 15 bis 52 Mol.-% Hexahydrophthalsäure und/oder Methylhexahydro phthalsäure und/oder deren Anhydrid(en),
   a.4) 0 bis 32 Mol. -% Phthalsäure und/oder deren Anhydrid,
   a.5) 0 bis 18 Mol.-% anderen Alkandiolen aus der Gruppe, 1,2-, 1,3-, 1,4-Butandiol, 1,5-Pentandiol, 1,6-Hexandiol, Cyclohexan-1,4-dimethanol, Hydroxypivalinsäureneopentylester, Cyclohexandiol, Trimethylpentandiol, Ethylbutylpropandiol, Ethylenglykol, Diethylenglykol, Triethylenglykol, 1,2-Propylenglykol, Dipropylenglykol, Hexytenglykol, einzeln oder im Gemisch,
   a.6) 0 bis 32 Mol. -% anderen Dicarbonsäuren und/oder Hydroxydicarbonsäuren und/oder deren Anhydrid(en) und/oder aus der Gruppe 5-Hydroxyisophthalsäure, Isophthalsäure, Terephthalsäure, Halogensäuren, wie Tetrachlor- bzw. Tetrabromphthalsäure, Tetrahydrophthalsäure, 1,2-Cyclohexandicarbonsäure, 1,4-Cyclohexandicarbonsäure, 4-Methylhexahydrophthalsäure, Endomethylentetrahydrophthalsäure, Tricyclodecan-Dicarbonsäure, Endoethylenhexahydrophthalsäure, Camphersäure (1,2,2,-Trimethylcyclopentan-1,3-dicarbonsäure), Adipinsäure, Bernsteinsäure, Azelainsäure, Sebacinsäure, Glutarsäure, einzeln oder im Gemisch, a.7) 0 bis 16 Mol.-% Monocarbonsäuren oder/und Hydroxycarbonsäuren aus der Gruppe Benzoesäure, p.tert.-Butylbenzoesäure, Laurinsäure, Isononansäure, 2,2-Dimethylpropionsäure, 2-Ethylhexansäure, Capronsäure, Caprylsäure, Caprinsäure, Versaticsäure, Hexahydrobenzoesäure, Hydroxypivalinsäure, 3-(4-)Hydroxybenzoesäure, 2-Hydroxyisobuttersäure, 2-(3-,4-,2-) Hydroxy-3-(4-,3-,4-)methoxybenzoesäure, 2-(3-)Hydroxy-4-(4-)methylbenzoesäure, 2-(3-,4-)Hydrophenylaceticsäure, 2-Hydroxy-2-phenylpropionsäure, 3-(4-)-Hydroxy3-(3-)phenylpropionsäure, einzeln oder im Gemisch,
   a.8) 0 bis 14 Mol.-% aliphatischen und/oder cycloaliphatischen Monoalkoholen, wobei die Monoalkohole 4 bis 18 C-Atome besitzen, einzeln oder im Gemisch.
   wobei die sich unter a.1), a.2), a.3), gegebenenfalls a.4), a.5), a.6), a.7) und a.8) angegebenen Mol.-% Angaben jeweils zu 100 Mol.-% ergänzen, und
B. 90 bis 10 Gew.-% Acrylatharz gemäß Ausführungsform 1 für Acrylatharzkomponente B.

### Ausführungsform 2 für Acrylatharzkomponente B

Acrylatharz aus
b.1) 5 bis 35 Gew.-% Hydroxyalkyl(meth)acrylat mit 2 bis 5 C-Atomen im Hydroxyalkylrest, einzeln oder im Gemisch,
b.2) 10 bis 80 Gew.-% aromatischen Vinylverbindungen, einzeln oder im Gemisch,
b.3) 0 bis 50 Gew.-% Alkyl(meth)acrylaten mit 1 bis 9 C-Atomen im Alkylrest, einzeln oder im Gemisch;
b.4) 0,0 bis 6 Gew.-% (Meth)acrylsäure, einzeln oder im Gemisch,
wobei sich b.1), b.2), gegebenenfalls b.3) und/oder b.4) zu 100 Gew.-% ergänzen.

In einer weiteren Ausführung ist im Acrylatharz die Teilkomponente b.3) im Bereich von 5 bis 30 Gew.-% vorhanden.

### Ausführungsform 3 für Acrylatharzkomponente B

In einer weiteren Ausführungsform 3 für Acrylatharzkomponente B ist die Teilkomponente b.4) im Bereich von 0,5 bis 3 Gew.-% zusätzlich in der Ausführungsform 2 für Acrylatharzkomponente B vorhanden.

Ein weiteres Bindemittel auf Polyester-Acrylatbasis, welches eine Polyesterkomponente A in einer weiteren Ausführungsform enthält, ist aufgebaut aus:
A. 10 bis 90 Gew.-% Polyester
   - mit Hydroxylzahlen von 80 bis 260 mg KOH/g Festharz,
   - Säurezahlen von 8 bis 25 mg KOH/g Festharz und
   - stöchiometrisch errechneten Molmassen von 580 bis 8000,
aufgebaut aus Umsetzungsprodukten von
a.1) 10 bis 47 Mol.-% Neopentylglykol,
a.2) 5 bis 42 Mol.-% Trimethylolpropan,
a.3) 32 bis 50 Mol.-% Hexahydrophthalsäure und/oder Methylhexahydrophthalsäure oder deren Anhydrid(en),
a.4) 1 bis 20 Mol.-% Phthalsäure und/oder deren Anhydrid,
wobei sich die unter a.1), a.2), a.3) und a.4) angegebenen Mol.-%-Angaben jeweils zu 100 Mol.-% ergänzen, und
10 bis 90 Gew. -% Acrylatharz in der schon genannten Ausführungsform 1 für Acrylatharzkomponente B.

Ein Bindemittel auf Polyester-Acrylatbasis, welches eine Polyesterkomponente A in einer weiteren Ausführungsform enthält, ist aufgebaut aus:
A. 10 bis 90 Gew.-% Polyester mit Hydroxylzahlen von 80 bis 255 mg KOH/g Festharz, Säurezahlen von 9 bis 24 mg KOH/g Festharz und stöchiometrisch errechneten Molmassen von 600 bis 7000, aufgebaut aus Umsetzungsprodukten von
   a.1) 12 bis 46 Mol.-% Neopentylglykol,
   a.2) 5 bis 40 Mol.-% Trimethylolpropan,
   a.3) 35 bis 49 Mol.-% Hexahydrophthalsäure und/oder Methylhexahydrophthalsäure oder deren Anhydrid (en),
   a.4) 2 bis 15 Mol.-% Phthalsäure und/oder deren Anhydrid,
   wobei die sich unter a.1), a.2), a.3) und a.4) angegebenen Mol.-%-Angaben jeweils zu 100 Mol.-% ergänzen, und
B. 10 bis 90 Gew.-% Acrylatharz in der schon genannten Ausführungsform 1, für Acrylatharzkomponente B.

In einer weiteren speziellen Ausführungsform der Erfindung ist in dem Bindemittel eine Polyesterkomponente A in der folgenden Ausführungsform enthalten, die ein Umsetzungsprodukt aus Neopentylglykol, Trimethylolpropan, Hexahydrophthalsäure und/oder deren Anhydrid und Iso-Phthalsäure darstellt. Die Ausführungsform für Polyesterkomponente A wird durch die folgenden Angaben verdeutlicht.
A. 10 bis 90 Gew.-% Polyester mit Hydroxylzahlen von 80 bis 300 mg KOH/g Festharz, Säurezahlen von 5 bis 30 mg KOH/g Festharz und stöchiometrisch errechneten Molmassen von 500 bis 15000, aufgebaut aus Umsetzungsprodukten von
   a.1) 5 bis 50 Mol.-% Neopentylglykol,
   a.2) 5 bis 45 Mol.-% Trimethylolpropan,
   a.3) 20 bis 51,5 Mol.-% Hexahydrophtalsäure und/oder Methylhexahydrophthalsäure oder deren Anhydrid(e),
   a.6) 0,5 bis 32 Mol.-% Iso-Phthalsäure,
   wobei sich die Bestandteile a.1), a.2), a.3) und a.6) zu 100 Mol.-% ergänzen müssen,
B. 90 bis 10 Gew.-% Acrylatharz in der schon genannten Ausführungsform 1 für Acrylatharzkomponente B.

Die Herstellung der erfindungswesentlichen Polyester als Polyesterkomponente A erfolgt in an sich bekannter Weise nach Methoden wie sie beispielsweise in "Ullmanns Encyclopädie der technischen Chemie', Verlag Chemie Weinheim, 4. Auflage (1980), Band 19, Seiten 61 ff. oder von H. Wagner und H.F. Sarx in "Lackkunstharze", Carl Hanser Verlag, München (1971), Seiten 86 bis 152 ausführlich beschrieben sind. Die Veresterung erfolgt gegebenenfalls in Gegenwart einer katalytischen Menge eines üblichen Veresterungskatalysators, wie z. B. Säuren, Basen, oder Übergangsmetallverbindung, wie z. B. Titantetrabutylat bei ca. 80 bis 260°C, vorzugsweise 100 bis 230°C. Die Veresterungsreaktion wird so lange durchgeführt, bis die angestrebten Werte für die Hydroxyl und Säurezahl erreicht sind. Es wird bevorzugt, keine Veresterungskatalysatoren einzusetzen. Das Molekulargewicht der Polyesterkomponente A kann aus der Stöchiometrie der Ausgangsmaterialien (unter Berücksichtigung der resultierenden Hydroxyl- und Säurezahlen) berechnet werden.

Die Herstellung der Bindemittel auf Polyester-Acrylatbasis erfolgt durch Polymerisation der die Acrylatkomponente B bildenden Monomeren in Anwesenheit von inertem Lösungsmittel und der Polyesterkomponente A. Hierbei wird bevorzugt sehr wenig organisches, inertes und hochsiedendes Lösungsmittel (mindestens 120°C) zusammen mit dem Polyester in das Polymerisationsgefäß eingefüllt. Man erhitzt das eingefüllte Gemisch auf Siedetemperatur im Bereich von 120 bis 210°C und gibt dann die zu polymerisierenden Monomeren mit dem Initiator bzw. Initiatorengemischen im Verlaufe von 2 bis 12 Stunden kontinuierlich zu. Nach Beendigung der Zugabe der Monomeren wird im gleichen Temperaturbereich noch 2 bis 6 Stunden nachpolymerisiert. Das Reaktionsprodukt fällt mit 60 bis 100 Gew.-% Festkörper bevorzugt mit einem Festkörper von 70 bis 95 Gew.-% an. Das Reaktionsprodukt wird dann mit einem auf den Gebrauchszweck angepassten organischen Lösungsmittel auf eine gut verarbeitbare Viskosität eingestellt, z. B. maximal 20 000 mPas bei 23°C.

Für die Herstellung der erfindungsgemäßen B indemittel kommen die üblichen radikalbildenden Verbindungen als Polymerisationsinitiatoren, einzeln oder im Gemisch, in Frage. Solche sind z. B. aliphatische Azoverbindungen, Diacylperoxide, Peroxydicarbonate, Alkylperester, Alkylhydroperoxide, Perketale, Dialkylperoxide oder Ketonperoxide. Bevorzugt werden Dialkylperoxide, wie Di-t-butylperoxid, Dibenzoylperoxide oder Di-t-amylperoxid, und Alkylperester, wie t-Butylperoxy-2-ethylhexanoat, t-Amylperoxy-2-ethylhexanoat, 1,1-Di-(t-Amylperoxy)cyclohexan, 1,1-Di-(tert.-Butylperoxy) cyclohexan, t-Amylperoxyacetat, Ethyl-3, 3-di-(t-amylperoxy)butyrat, Di-t-amylperoxid, 3-Ethyl-pent-3-yl-peroxy-2-ethylhexanoat und Di-(3-ethyl-pent-3-yl)-peroxid, eingesetzt.

Weiterhin seien genannt 2,5-Dimethyl-2,5-di-(tert.-butylperoxy)-hexan-(3), tert.Butylperoxybenzoat, tert.-Butylperoxy-3,5,5-trimethylhexanoat, 2,5-Dimethyl-2,5-di(benzoylperoxy)-hexan, tert-Butyl-(isopropyl)monoperoxyhexan, tert-Butyl-(2-ethylhexyl)-monoperoxycarbonat, 2,5-Dimethyl-2,5-di-(tert.-butylperoxy)-hexan, Dicumylperoxid, tert.-Butylhydroperoxid, tert.Amylhydroperoxid, Cumylhydroperoxid, 2,5-Dimethyl-2,5-dihydroperoxyhexan, Diisopropylbenzolmonohydroperoxid und 2,2-Azo-di(2-acetoxypropan).

Der Anteil der Initiatoren kann z. B. 1 bis 8, vorzugsweise bis 6, insbesondere bis 5 Gew.-%, bezogen auf das Gesamtgewicht der Ausgangskomponenten, betragen. Geeignete Polymerisationsgemische bestehen z. B. aus Ditert.Butylperoxid und Dibenzoylperoxid, tert.-Butylper-2-ethyl-hexanoat und Ditert.Amyl peroxid, tert. -Butylper-2-ethylhexanoat und Di-tert.-Butylperoxid, tert.-Butylper-2-ethylhexanoat und 1,1-Di(tert.-Butylperoxy)cyclohexan, tert.-Butylper-2-ethylhexanoat und Dibenzoylperoxid, jedoch sind auch andere Gemische gut brauchbar.

Zur Regelung des Molekulargewichts können Kettenüberträger mitverwendet werden. Beispiele sind Mercaptane, Thioglykolsäureester, Chlorkohlenwasserstoffe, bevorzugt wird Dodecylmercapten und Mercaptoethanol eingesetzt.

Als Lösungsmittel können in der Lackindustrie übliche inerte Lösungsmittel, einzeln oder im Gemisch, mit Siedepunkten von 80°C bis 220°C, bevorzugt 125°C bis 185°C, für die Lösungspolymerisation eingesetzt werden. Bevorzugt eignen sich solche organischen Lösungsmittel, die dann später auch in den fertigen Überzugsmitteln eingesetzt werden. Beispiele für solche Lösungsmittel sind: Glykolether, wie Ethylenglykoldimethylether, Glykoletherester; Ester, wie Butylglykolacetat, 3-Methoxy-n-butylacetat, Butyldiglykolacetat, Methoxypropylacetat, Ethoxypropylacetat, Butylacetat, Ethyl-3-Ethoxypropionat, Isobutylacetat, Amylacetat; und Ketone, wie Methyl-n-amylketon, Methylethylketon, Methylisobutylketon, Diisobutylketon, Cyclohexanon, Isophoron; aromatische Kohlenwasserstoffe, wie Xylol. Shellsol A (eingetragenes Warenzeichen für aromatische Kohlenwasserstoffgemische), und aliphatische Kohlenwasserstoffe können ebenfalls im Verschnitt mit den vorstehend genannten Lösungsmitteln eingesetzt werden. Das durch Lösungspolymerisation erhaltene Bindemittel kann auch durch andere in der Lackindustrie übliche inerte organische Lösungsmittel, angepaßt an den Gebrauchszweck, verdünnt werden.

Die Herstellung des Polyesters als Vorprodukt für die Komponente A erfolgt durch Polykondensationsreaktion bei etwa 170°C bis 230°C, bevorzugt in Abwesenheit von Lösungsmitteln. Hierbei werden bevorzugt keine Katalysatoren mitverwendet. Die Polykondensation erfolgt in etwa 6 bis etwa 15 Stunden. Das erhaltene lösungsmittelfreie Polykondensationsprodukt stellt eine hochviskose, klebrige oder feste Masse dar, die je nach Zusammensetzung unterschiedliche Viskositäten, Hydroxylzahlen und Säurezahlen aufweist. Die Säurezahlen liegen hierbei zwischen 5 bis 30 mg KOH/g Festharz. Die Hydroxylzahlen sind hierbei zwischen 70 bis 300 mg KOH/1 g Festharz. Die berechneten Molekulargewichte betragen von 400 bis 15000.

Herstellung der Polyesterkomponente A als Vorprodukt für die Herstellung des Bindemittels auf Polyester-Acrylatbasis.

### Polyester 1 (Vergleichsbeispiel)

In einen Reaktionskessel werden 4168 g Neopentylglycol und 4626 g Hexahydrophthalsäureanhydrid eingefüllt und auf 180°C unter Stickstoffzufuhr mit einem aufgesetzten Kolonnenaufsatz zur Wasserabtrennung zwecks Polykondensation erhitzt, wobei die Temperatur bis 220°C kontinuierlich erhöht wird.
Nach 8 bis 13 Stunden wird die Polykondensation nach Erreichen von Säurezahlen 17 bis 20 beendet. Hierbei beträgt der Umsatz etwa 95,5%. Dieser Polyester 1 ist aus 57,143 Mol.-% Neopentylglykol und 42,857 Mol.-% Hexahydrophthalsäureanhydrid aufgebaut.

Zur Überprüfung der Viskosität wird der erhaltene Polyester 1 nach Auflösen in Butylacetat als 80 gew.-%ige Lösung bei 20°C zwischen 1800 und 4000 mPas aufweisen.

Weitere Polyester sind in der Tabelle I angegeben:

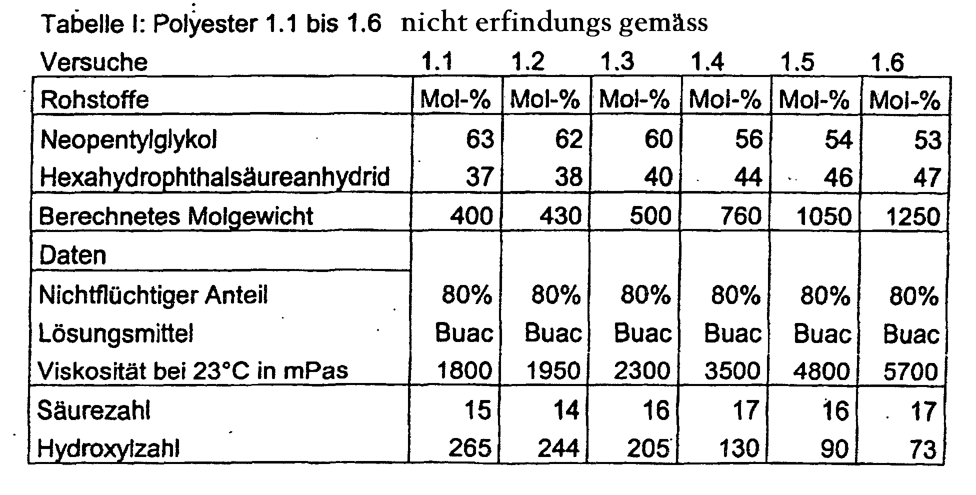

### Polyester 2 nicht erfindungsgemäss

Polyester aus

| | |
|---|---|
| 3,0 Mol Neopentylglykol | 312 g |
| 3,8 Mol Trimethylolpropan | 509 g |
| 6,0 Mol Hexahydrophthalsäureanhydrid | 925 g |
| Mittleres Molgewicht: | ca. 1330 |

Das vorstehende Gemisch wurde unter Stickstoff auf 190 bis 200°C erhitzt, und das gebildete Reaktionswasser wurde laufend entfernt. Die Temperatur wurde im Verlauf von 7 bis 12 Stunden kontinuierlich auf 220°C erhöht, bis die Säurezahl auf 15 bis 25 abgesunken war. Nach dem Abkühlen liegt das Reaktionsprodukt in fester Form vor. Durch mehrfache Wiederholung der Umsetzung wurden für die Polyester folgende Werte gefunden:

| | 1. Versuch | 2. Versuch |
|---|---|---|
| Hydroxylzahlen (DIN 53240): | 196 | 200 |
| Säurezahlen (DIN 53402): | 18,7 | 19 |
| Viskositäten (DIN 53019) in mPas | 2560 | 2880 |

Der Polyester besteht aus 53 Mol.-% Polyolen und 47 Mol.-% Dicarbonsäure.

### Polyester 3 nicht erfindungsgemäss

Polyester aus

| | |
|---|---|
| 3,0 Mol Neopentylglykol | 312 g |
| 3,4 Mol Trimethylolpropan | 456 g |
| 6,0 Mol Hexahydrophthalsäureanhydrid | 925 g |
| Mittleres Molgewicht: | ca. 2330 |

Das vorstehende Gemisch wurde unter Stickstoff auf 190 bis 200°C erhitzt, und das gebildete Reaktionswasser wurde laufend entfernt. Die Temperatur wurde im Verlauf von 3 bis 10 Stunden kontinuierlich auf 235°C erhöht, bis die Säurezahl auf 15 bis 25 abgesunken war. Nach dem Abkühlen liegt das Reaktionsprodukt in fester Form vor. Durch mehrfache Wiederholung der Umsetzung wurden für die Polyester folgende Werte gefunden:

| | 1. Versuch | 2. Versuch |
|---|---|---|
| Hydroxylzahlen (DIN 53240): | 156 | 158 |
| Säurezahlen (DIN 53402): | 20,2 | 18,6 |
| Viskositäten (DIN 53019) in mPas: | 3120 | 4480 |

Der Polyester besteht aus 51,6 Mol.-% Polyolen und 48,4 Mol.-% Dicarbonsäure.

### Polyester 4 nicht erfindungsgemäss

Polyester aus

| | |
|---|---|
| 0,2 Mol Neopentylglykol | 20,84 g |
| 1,62 Mol Trimethylolpropan | 218,746 g |
| 1,8 Mol Hexahydrophthalsäureanhydrid | 277,56 g |
| Mittleres Molgewicht: | ca. 2900 |

Das vorstehende Gemisch wurde unter Stickstoff auf 190 bis 205°C erhitzt, und das gebildete Reaktionswasser wurde laufend entfernt. Die Temperatur wurde im Verlauf von 4 bis 10 Stunden kontinuierlich auf 230°C erhöht bis die Säurezahl auf 10 bis 20 abgesunken war. Nach dem Abkühlen liegt das Reaktionsprodukt in fester Form vor. Es wurden für den Polyester folgende Werte gefunden.

| | |
|---|---|
| Hydroxylzahl (DIN 53240): | 210 |
| Säurezahl (DIN 53402): | 15,9 |
| Viskosität (DIN 53019) in mPas | 5500 |

Der Polyester besteht aus 50,414 Mol.-% Polyolen und 49,587 Mol.-% Dicarbonsäure.

Die für die Polyester 2, 3 und 4 angegebenen Viskositäten (gemessen nach DIN 53019) bei 23°C in mPas beziehen sich auf Polyester, gelöst in Butylacetat, als 70 gew.-%ige Lösungen.

Weitere Polyester sind in der Tabelle II angegeben:

**Tabelle II:**

| Polyester 4.1 bis 4.5 nicht erfindungsgemäss | | | | | |
|---|---|---|---|---|---|
| Versuche | 4.1 | 4.2 | 4.3 | 4.4 | 4.5 |
| Rohstoffe | Mol-% | Mol-% | Mol-% | Mol-% | Mol-% |
| Neopentylglykol | 47,62 | 55,00 | 29,27 | 39,95 | 39,95 |
| Trimethylolpropan | 9,52 | 5,00 | 21,95 | 15,00 | 15,00 |
| Hexahydrophthalsäureanhydrid Methylhexahydrophthalsäureanhydrid | 42,86 | 40,00 | 48,78 | 45,05 | 45,05 |
| stöch. MG | 660 | 510 | 1950 | 1060 | 1000 |
| Daten | | | | | |
| Nichtflüchtiger Anteil | 70% | 70% | 70% | 70% | 70% |
| Lösungsmittel | Buac | Buac | SSA | Xylol | Xylol |
| Viskosität bei 23°C, direkt in mPas | 410 | 320 | 10500 | 1480 | 1540 |
| Säurezahl | 19,2 | 16 | 25,6 | 10,5 | 14 |
| Hydroxylzahl | 195 | 227 | 143 | 160 | 170 |

### Polyester 5 nicht erfindungsgemäss

Polyester aus

| | |
|---|---|
| 2,5 Mol Neopentylglykol | 260,5 g |
| 1,5 Mol Trimethylolpropan | 201,3 g |
| 3,0 Mol Hexahydrophthalsäureanhydrid | 462,6 g |

Das vorstehende Gemisch wurde unter Stickstoff auf 190 bis 220°C erhitzt, und das gebildete Reaktionswasser wurde laufend entfernt. Die Temperatur wurde im Verlauf von 5 bis 10 Stunden kontinuierlich auf 220°C erhöht, bis die Säurezahl auf 15 bis 25 abgesunken war. Nach dem Abkühlen auf 160°C wird 0,25 Mol Phthalsäureanhydrid 37,025 g zugegeben und unter Stickstoff auf 190 bis 220°C erhitzt und das gebildete Reaktionswasser laufend entfernt. Die Temperatur wurde im Verlauf von 1 bis 5 Stunden kontinuierlich auf 220°C erhöht, bis die Säurezahl auf 10 bis 25 abgesunken war. Nach dem Abkühlen liegt das Reaktionsprodukt in fester Form vor. Durch Zugabe von 380 g Butylacetat wird das Produkt auf ca. 70 Gew.-% nichtflüchtigen Anteil verdünnt.

Durch mehrfache Wiederholung der Umsetzung wurden für die Polyester folgende Werte gefunden.

| Versuche | 1 | 2 | 3 | 4 | 5 |
|---|---|---|---|---|---|
| Hydroxylzahl (DIN 53240) mg KOH/g Festharz | 195 | 194 | 193 | 194 | 195 |
| Säurezahl (DIN 53402) mg KOH/g Festharz | 16,1 | 16,3 | 15,5 | 17,7 | 18,9 |
| Viskosität (DIN53019) in mPas bei 23°C/Lieferform | 1190 | 1050 | 1110 | 1070 | 1040 |
| Nichtflüchtiger Anteil (DIN 53216) in % / 1 Std. bei 125°C | 70,1 | 70,0 | 70,2 | 70,0 | 70,2 |

Der Polyester besteht aus 55,17 Mol.-% und 44,83 Mol.-% Dicarbonsäure.

Weitere Polyester sind in der Tabelle III angegeben:

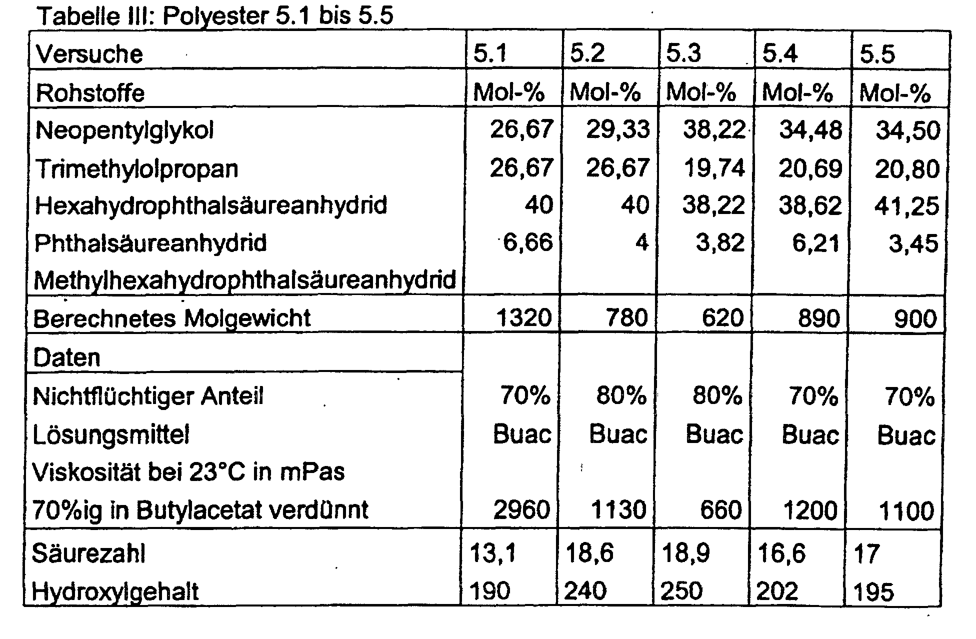

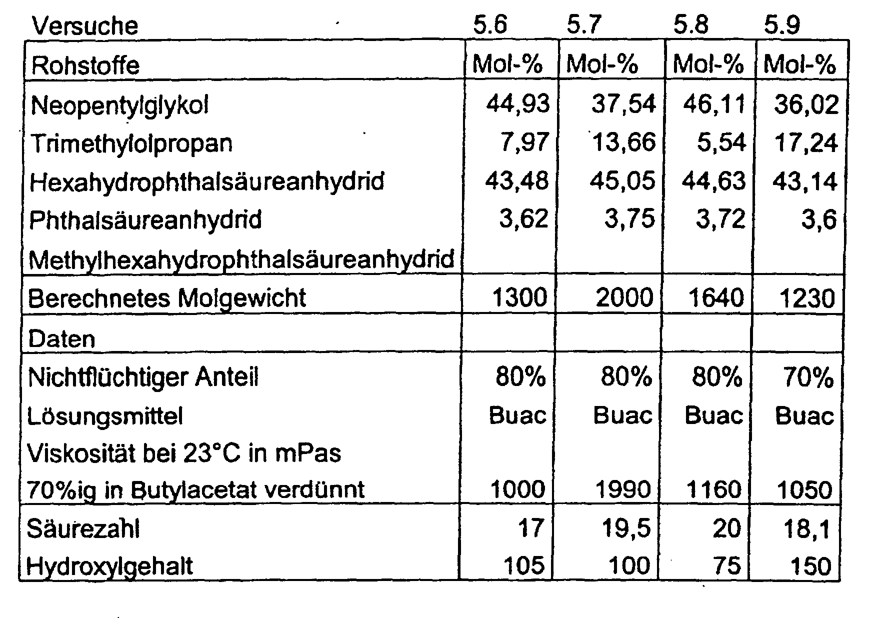

### Polyester 6

Weitere Polyester sind in der Tabelle IV angegeben:

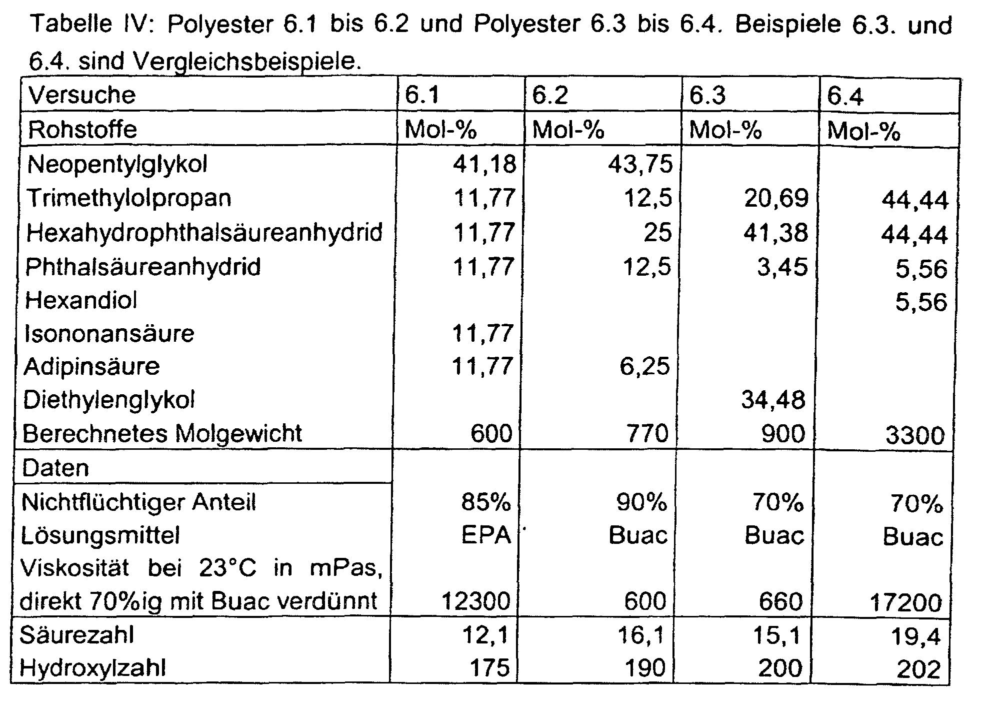

Weitere Polyester sind in der Tabelle V angegeben:

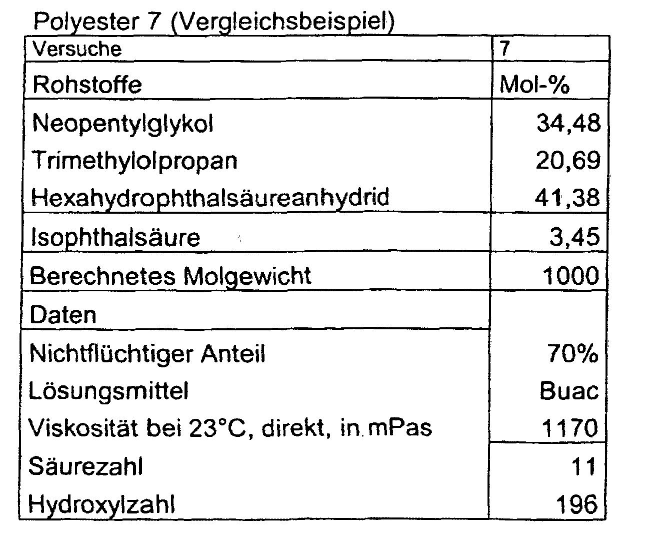

Als Komponente b.1) sind als Hydroxyalkyl(meth)acrylate mit 2 bis 5 C-Atomen im Hydroxyalkyl rest Hydroxyethyl(meth)acrylat, Hydroxypropyl(meth)acrylat, Hydroxybutyl(meth)acrylat und Hydroxyamyl(meth)acrylat, einzeln oder im Gemisch, geeignet.

Als Komponente b.2) werden beispielhaft als aromatische Vinylverbindungen Styrol (Alkylphenylethene), z. B. α-Methylstyrol, α-Chlorstyrol, und die verschiedenen Vinyltoluole genannt.

Als Komponente b.3) sind als Alkyl(meth)acrylate mit 1 bis 9 C-Atomen im Alkylrest Methyl(meth)acrylat, Ethyl(meth)acrylat, Propyl(meth)acrylat, nButyl(meth)acrylat, Isobutyl(meth)acrylat, tert.-Butyl(meth)acrylat, Amyl(meth)acrylate, Hexyl(meth)acrylate, Heptyl(meth)acrylate, Octyl(meth)acrylate, 2-Ethylhexyl(meth)acrylat, Nonyl(meth)acrylate, einzeln oder im Gemisch, brauchbar.

### Beispiel 1 (Vergleichsbeispiel)

### Herstellung des Bindemittels mit Polyester 1

In ein Polymerisationsgefäß mit Tropftrichter, Rührer und Kühlaufsatz mit Wasserabscheider wurden

| | |
|---|---|
| 2100 g | Polyester 1 als Polyesterkomponente A |
| 525 g | Ethoxypropylacetat |

eingefüllt und auf 194°C erhitzt. Im Verlaufe von 7 Stunden wurden bei der gleichen Temperatur ein Monomeren- und Initiatorengemisch aus

| | |
|---|---|
| 700 g | 2-Hydroxypropylmethacrylat, |
| 3060 g | Styrol, |
| 140g | Acrylsäure, |
| 1000 g | Isobutylmethacrylat, |
| 280 g | tert-Butylperoxy-2-ethylhexanoat, |

gleichmäßig zudosiert. Nach beendeter Zugabe wurde noch bei gleicher Temperatur 3 Stunden nachpolymerisiert.
Das erhaltene Bindemittel hat, bezogen auf den Feststoffanteil, eine Säurezahl von 15,3 mg KOH/g Festharz und eine errechnete Hydroxylzahl von 85 mg KOH/g Festharz. Der Feststoffanteil beträgt 93 Gew.-%.

Nach Verdünnung des Bindemittels mit 2475 g Butylacetat wurden folgende Kenndaten erhalten:
Feststoffgehalt 69,8 Gew.-% DIN 53216
Viskosität 1200 mPas bei 23°C DIN 53019.

### Beispiel 2 (Vergleichsbeispiel)

### Herstellung des Bindemittels mit Polyester 1

In ein Polymerisationsgefäß mit Tropftrichter, Rührer und Kühlaufsatz mit Wasserabscheider wurden

| | |
|---|---|
| 2100 g | Polyester 1 als Polyesterkomponente A, |
| 525 g | Ethoxypropylacetat |

eingefüllt und auf 197°C erhitzt. Im Verlaufe von 7 Stunden wurden bei der gleichen Temperatur ein Monomeren- und Initiatorengemisch aus

| | |
|---|---|
| 700 g | 2-Hydroxyethylmethacrylat, |
| 700 g | 2-Hydroxypropylmethacrylat |
| 2660 g | Styrol |
| 140g | Acrylsäure |
| 700 g | Isobutylmethacrylat |
| 280 g | tert-Butyl peroxy-2-ethylhexanoat |

gleichmäßig zudosiert. Nach beendeter Zugabe wurde noch bei gleicher Temperatur 3 Stunden nachpolymerisiert.
Das erhaltene Bindemittel hat, bezogen auf den Feststoffanteil, eine Säurezahl von 15,5 mg KOH/g Festharz und eine errechnete Hydroxylzahl von 127 mg KOH/g Festharz. Der Feststoffanteil beträgt 93 Gew.-%.

Nach Verdünnung des Bindemittels mit 2475 g Butylacetat wurden folgende Kenndaten erhalten:
Feststoffgehalt 69,5 Gew.-% DIN 53216
Viskosität 1230 mPas bei 23°C DIN 53019.

Weitere Bindemittel sind in der Tabelle VI angegeben:

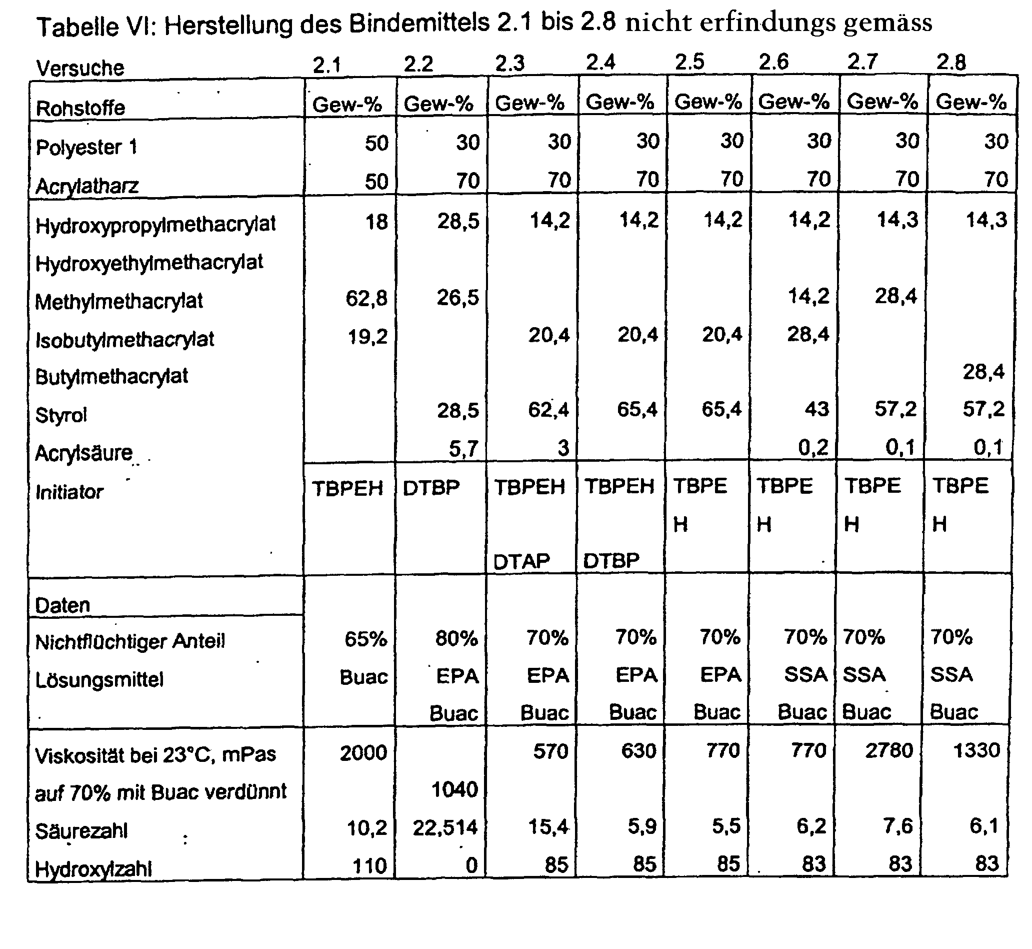

Weitere Bindemittel sind in der Tabelle VII angegeben:

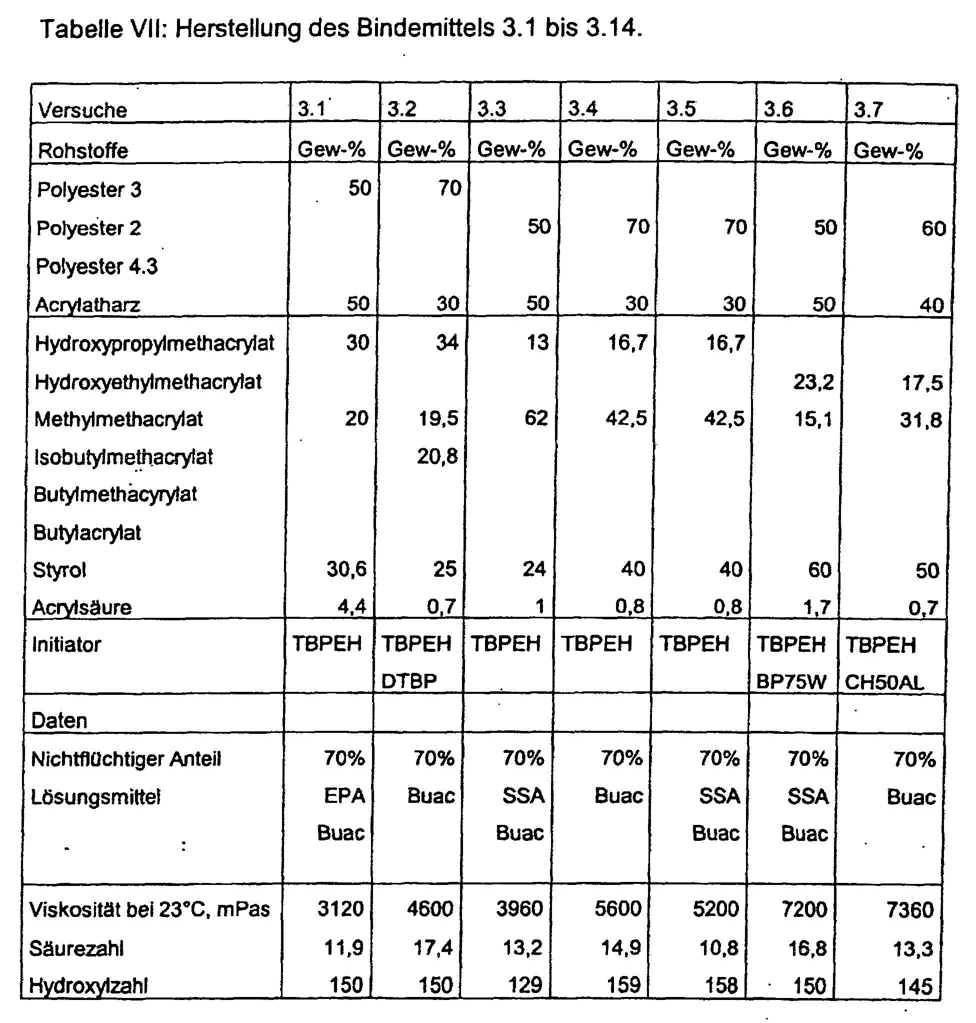

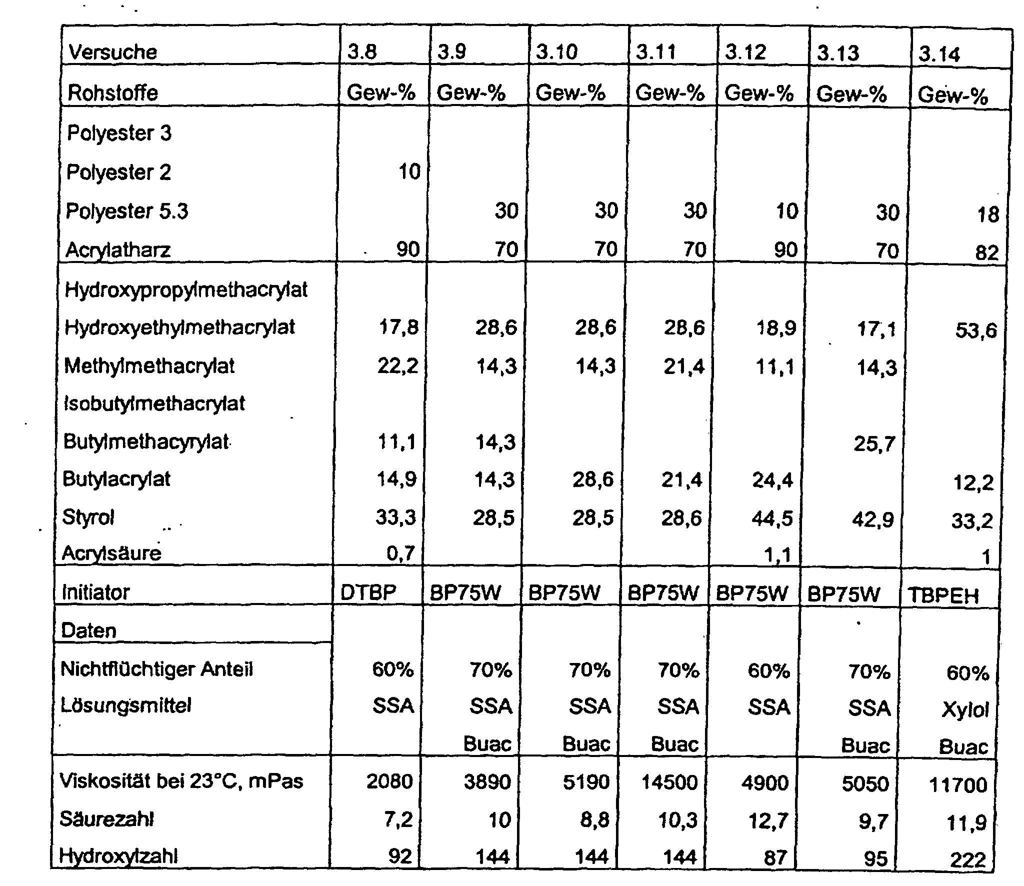

Weitere Bindemittel sind in der Tabelle VIII angegeben:

**Tabelle VIII:**

| Herstellung des Bindemittels 4.1 bis 4.9 | | | | | | | | | |
|---|---|---|---|---|---|---|---|---|---|
| Versuche | 4.1 | 4.2 | 4.3 | 4.4 | 4.5 | 4.6 | 4.7 | 4.8 | 4.9 |
| Rohstoffe | Gew-% | Gew-% | Gew-% | Gew-% | Gew-% | Gew-% | Gew-% | Gew-% | Gew-% |
| Polyester 5 | 30 | 30 | 30 | 28 | 28 | 25 | 12 | 15 | 18 |
| Acrylatharz | 70 | 70 | 70 | 72 | 72 | 75 | 88 | 85 | 82 |
| Hydroxypropylmethacrylat | 14,3 | 14,3 | 10 | 11,1 | 11,1 | 9,3 | | | 15,8 |
| Hydroxyethylmethacrylat | 14,3 | | | | | | 13,6 | 25,9 | |
| Methylmethacrylat | | | 90 | 16,7 | 13,9 | 80 | 73,9 | 11,8 | 6,6 |
| Isobutylmethacrylat | 14,3 | 25,7 | | | | | | | |
| Butylmethacrylat | | | | | | 10,4 | 12 | 15,3 | 12,2 |
| tert. Butylmethacrylat | | | | 48,6 | 51,4 | | | | |
| Butylacrylat | | | | 23,6 | 23,6 | | | | |
| Styrol | 54,3 | 57,1 | | | | | | 47 | 63,4 |
| Acrylsäure | 2,8 | 2,9 | | | | 0,3 | 0,5 | | 2 |
| Initiator | TBPEH | TBPEH | TBPEH | TBPEH | TBPEH | TBPEH | TBPEH | TBPEH BP75W | DTAP |
| Daten | | | | | | | | | |
| Nichtflüchtiger Anteil | 70% | 70% | 55% | 75% | 80% | 50% | 55% | 70% | 70% |
| Lösungsmittel | EPA Buac | SSA Buac | Buac | EPA Buac | EPA Buac | Buac | Buac | EEP | EPA Buac |
| Viskosität bei 23°C,mPas | 2780 | 5480 | 3590 | 8100 | 18800 | 1550 | 7500 | 8500 | 1680 |
| Säurezahl | 13,8 | 15,6 | 7,9 | 6,7 | 9,7 | 5,9 | 6,7 | 5,3 | 9,9 |
| Hydroxylzahl | 139 | 97 | 85 | 87 | 87 | 75 | 74 | 125 | 85 |

Die beschriebenen Polyester 1,1.1 bis 1.6, Polyester 2, 3, 4, 4.1 bis 4.5, Polyester 5, 5.1 bis 5.9, Polyester 6.1 bis 6.2, Polyester 7 und Polyester 6.3 und 6.4 können als Polyesterkomponente A mit den Monomeren zur Bindemittelbildung und der Acrylatharzkomponente B gemäß Beispiel 1, 2, Versuche 2.1 bis 2.8, Versuchen 3.1 bis 3.14 und Versuchen 4.1 bis 4.9 ebenfalls kombiniert werden, so daß im Bindemittel 10 bis 90 Gew.-% Polyester A und 10 bis 90 Gew.-% Acrylatharz B vorliegen können. Spezielle Untersuchungen haben gezeigt, daß solche Bindemittel bei der Vernetzung mit Di- und/oder Polyisocyanaten ebenfalls Überzüge mit wertvollen Eigenschaften liefern.

Bei der erfindungsgemäßen Verwendung der Bindemittel werden diese gegebenenfalls in Abmischung mit anderen, aus der Polyurethanlacktechnologie bekannten organischen Polyhydroxylverbindungen als Polyhydroxyl-Komponente eingesetzt. Bei diesen anderen Polyhydroxylverbindungen kann es sich um die üblichen Polyester-, Polyether- oder Polyacrylat-Polyole handeln. Vorzugsweise werden als weitere organische Polyhydroxylverbindungen, falls solche überhaupt neben den erfindungsgemässen Bindemitteln zum Einsatz gelangen, die an sich bekannten Polyacrylat-Polyole des Standes der Technik eingesetzt.

Als Abmischkomponente geeignete Polyacrylat-Polyole sind z. B. in Lacklösungsmitteln der bereits beispielhaft genannten Art Iösliche Copolymerisate, wie diese nach DE-OS 40 01 580, DE-OS 41 24 167 oder DE-OS 28 58 096 erhältlich sind geeignet. Der Hydroxylgruppengehalt dieser Polyacrylat-Polyole liegt im allgemeinen zwischen 2 und 5 Gew.-%. Bei der erfindungsgemäßen Verwendung der erfindungsgemäßen Bindemittel können diese in Abmischung mit bis zu 90, vorzugsweise bis zu 50 Hydroxyläquivalent-%, bezogen auf alle Polyhydroxylverbindungen, an anderen Polyolen der beispielhaft genannten Art zum Einsatz gelangen. Besonders bevorzugt werden jedoch die erfindungsgemäßen Bindemittel als alleinige Polyol-Komponente bei der erfindungsgemäßen Verwendung eingesetzt..

Die zur Vernetzung der erfindungsgemäßen Bindemittel verwendbaren Polyisocyanate sind lacktypische Polyisocyanate.

Der Anteil an Polyisocyanat-Vernetzer wird so gewählt, daß auf eine Hydroxylgruppe der Bindemittelmischung 0,5 bis 1,5 Isocyanat-Gruppen entfallen. Überschüssige Isocyanat-Gruppen können durch Feuchtigkeit abreagieren und zur Vernetzung beitragen. Es können aliphatische, cycloaliphatische und aromatische Polyisocyanate verwendet werden wie Hexamethylendiisocyanate, Trimethylhexamethylendiisocyanat, Isophorondiisocanate, 4,4-Diisocyanatodicyclohexylmethan, Toluylen-2,4-diisocyanat, o-, m- und p-Xylylendiisocyanat, 4,4-Diisocyanatodiphenylmethan; verkappte Polyisocyanate wie mit CH-, NH oder OH-aciden Verbindungen verkappte Polyisocyante; sowie z. B. Biuret-, Allophanat-, Urethan- oder IsocyanuratGruppen enthaltende Polyisocyanate. Beispiele für derartige Polyisocyanate sind ein Biuretgruppen enthaltendes Umsetzungsprodukt aus 3 Molen Hexamethylendiisocyanat mit 1 Mol Wasser mit einem NCO-Gehalt von ca. 22% (entsprechend dem Handelsprodukt Desmodur N BAYER AG, eingetragenes Warenzeichen); ein Isocyanatgruppen enthaltendes Polyisocyanat, das durch Trimerisierung von 3 Molen Hexamethylendiisocyanat hergestellt wird mit einem NCO-Gehalt von etwa 21,5 % (entsprechend dem Handelsprodukt Desmodur N 3390 BAYER AG, eingetragenes Warenzeichen) oder Urethangruppen enthaltende Polyisocyanate, welche Reaktionsprodukte darstellen aus 3 Molen Toluylendiisocyanat und 1 Mol Trimethylolpropan mit einem NCO-Gehalt von etwa 17,5% (entsprechend dem Handelsprodukt Desmodur L BAYER AG, eingetragenes Warenzeichen).

Bevorzugt eingesetzt werden Desmodur N und Desmodur N 3390, BAYER AG, eingetragenes Warenzeichen.

In den bei der erfindungsgemäßen Verwendung zum Einsatz gelangenden Zweikomponenten-Polyurethanlacken liegen die Bindemittelkomponente und die Polyisocyanatkomponente in einem Aquivalentverhältnis von Isocyanatgruppen zu Hydroxylgruppen von 2:1 bis 1:2, vorzugsweise 1,5:1 bis 1:1,5, vor. Die durch Vermischen der beiden Komponenten erhaltenen Zweikomponenten-Bindemittel haben nur eine begrenzte Verarbeitungszeit von ca. 2 bis 48 Stunden und werden unter Mitverwendung der Üblichen Hilfs- und Zusatzmittel verarbeitet. Diese gegebenenfalls mitzuverwendenden Hilfs- und Zusatzmittel können entweder dem Gemisch oder den Einzelkomponenten vor deren Durchmischung hinzugefügt werden.

Als Hilfs- und Zusatzmittel kommen beispielsweise inerte Lösungsmittel in Betracht wie z. B. Ethylacetat, Butylacetat, Methylethylketon, Methylisobutylketon, Ethoxypropylacetat, Methoxypropylacetat, Ethyl-3-ethoxypropionat, 3-Methoxy-n-butylacetat, Butylglykolacetat, Toluol, Xylol, Solvent Naphta, Testbenzin oder beliebige Gemische dieser Lösungsmittel. Die Lösungsmittel werden in einer Menge von bis zu 75, vorzugsweise bis zu 70 Gew.-% bezogen auf Gesamtgemisch, mitverwendet.

Weitere, gegebenenfalls mitzuverwendende Hilfs- und Zusatzmittel sind z. B. Weichmacher wie z. B. Trikresylphosphat oder Phthalsäurediester, Chlorparaffine; Pigmente und Füllstoffe wie Titanoxid, Bariumsulfat, Kreide, Ruß; Katalysatoren wie z. B. N,N-Dimethylbenzylamin, N-Methylmorpholin, Bleioctoat oder Dibutylzinndilaurat; Verlaufsmittel; Verdickurigsmittel, gegebenenfalls Stabilisatoren wie substituierte Phenole, organofunktionelle Silane als Haftvermittler; und Lichtschutzmittel beispielsweise sterisch gehinderte Amine, wie sie u. a. in DE-OS 2 417 353 (=US-PS 4 123 418 und US-PS 4 110 304) und DE-OS 2 456 864 (=US-PS 3 993 655 und US-PS 4221 701) beschrieben sind. Besonders bevorzugte Verbindungen sind: Bis-(1 ,2,2,2,6,6-pentamethylpiperidyl-4)-sebacat, Bis-(2,2,6,6-tetramethylpiperidyl-4)-sebacat, n-Butyl-(3,5-di-tert.-butyl-4-hydroxybenzyl)-malonsäure-bis-(1,2,2,6,6-pentamethylpiperidyl-4)-ester.

Die den Füllstoffen und Pigmenten anhaftende Feuchtigkeit kann durch vorhergehende Trocknung oder durch Mitverwendung von wasseraufnehmenden Stoffen, wie z. B. Molekularsieb-Zeolithen, entfernt werden.

Die Trocknung der bei der erfindungsgemäßen Verwendung resultierenden Lackfilme kann bei Raumtemperatur erfolgen und bedarf keiner Temperaturerhöhung, um die eingangs erwähnten, optimalen Eigenschaften zu erreichen. Die verhältnismäßig schnell verlaufende Trocknung bei Raumtemperatur kann durch eine Temperaturerhöhung auf ca. 60 bis 120°C, vorzugsweise 60 bis 80°C, während eines Zeitraumes von 20 bis 40 Minuten zusätzlich beschleunigt werden. Eine höhere Trocknungstemperatur und somit eine Verkürzung des Einbrennprozesses ist zwar möglich, jedoch bei vielen Substraten, z.B. Kunststoffteilen, nicht ratsam.

Die erfindungsgemäß zur Verwendung gelangenden Reaktionslacke eignen sich vor allem für die Lackierung von Metallen sowie Kunststoffen, jedoch auch für andere Substrate. Die erfindungsgemäß zum Einsatz gelangenden Reaktionslacke können nach allen üblichen Methoden der Lacktechnologie, wie z. B. Streichen, Spritzen, Gießen oder Tauchen, auf die zu beschichtenden Substrate aufgetragen werden. Die erfindungsgemäßen Reaktionslacke eignen sich sowohl zur Herstellung von Grundierungen als auch zur Herstellung von 26

Zwischenschichten sowie auch zur Herstellung von Deckschichten auf den zu lackierenden Substraten.

### Beispiel 5 (Vergleichsbeispiel)

### Herstellung einer Grundierung und/oder eines Füllers auf Basis des Bindemittels gemäß Beispiel 1 70%ig Ethoxypropylacetat/Butylacetat (5:25)

| | Gew.-Anteile |
|---|---|
| Bindemittel gemäß Beispiel 1 | 1900 |
| Siliconöl LO 50 1 %ig Xylol | 100 |
| Kronos Titandioxid 2160 | 1500 |
| Eisenoxidgelb | 1500 |
| Talkum AT extra | 800 |
| Zinkphosphat ZP 10 | 1000 |
| Aerosil 200 | 500 |
| Wollast 400 ST | 2300 |
| Bentone + Bykumen | 200 |
| Butylacetat | 2000 |
| Gesamt | 10000 |
| 20 min. Dissolver mit Wasserkühlung | |
| | |
| Viskosität bei 20°C 4mm Austaufbecher | 26 sek |
| Desmodur N 75 | 5 |
| Verdünner Bd 1316 | 1,5 |
| Topfzeit sofort | 21 sek. |
| + 1 h | 22 sek. |
| + 2 h | 26 sek. |
| + 2,5 h | 29 sek. |
| + 3 h | 32 sek. |
| + 4 h | 45 sek. |
| + 5 h | 65 sek. |
| Sandtrocken | 14 min. |
| T2 | 16 min. |
| T3 | 20 min. |
| T4 | 30 min. |
| T5 | 65 min. |
| T6 | 33 min. |
| T7 | 100 min. |
| Festkörper bei 21 sek. 1,5 g/1h bei 125°C + 2ml Eac/DIN 53216= 70,80 Gew.-% | |

### Beispiel 6

Desweiteren sind Beispiele für gebrauchsfähige 2-Komponenten Decklacke auf Basis der erfindungsgemäßen Bindemittel in Tabelle IX aufgeführt:

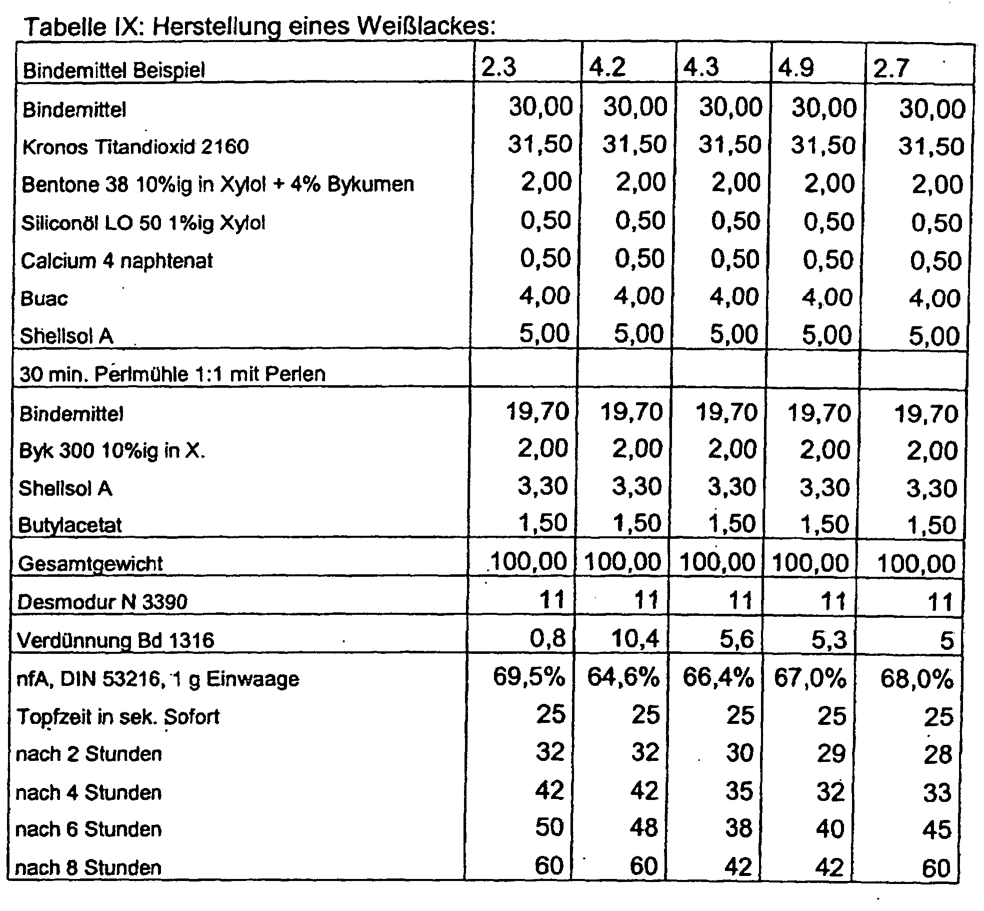

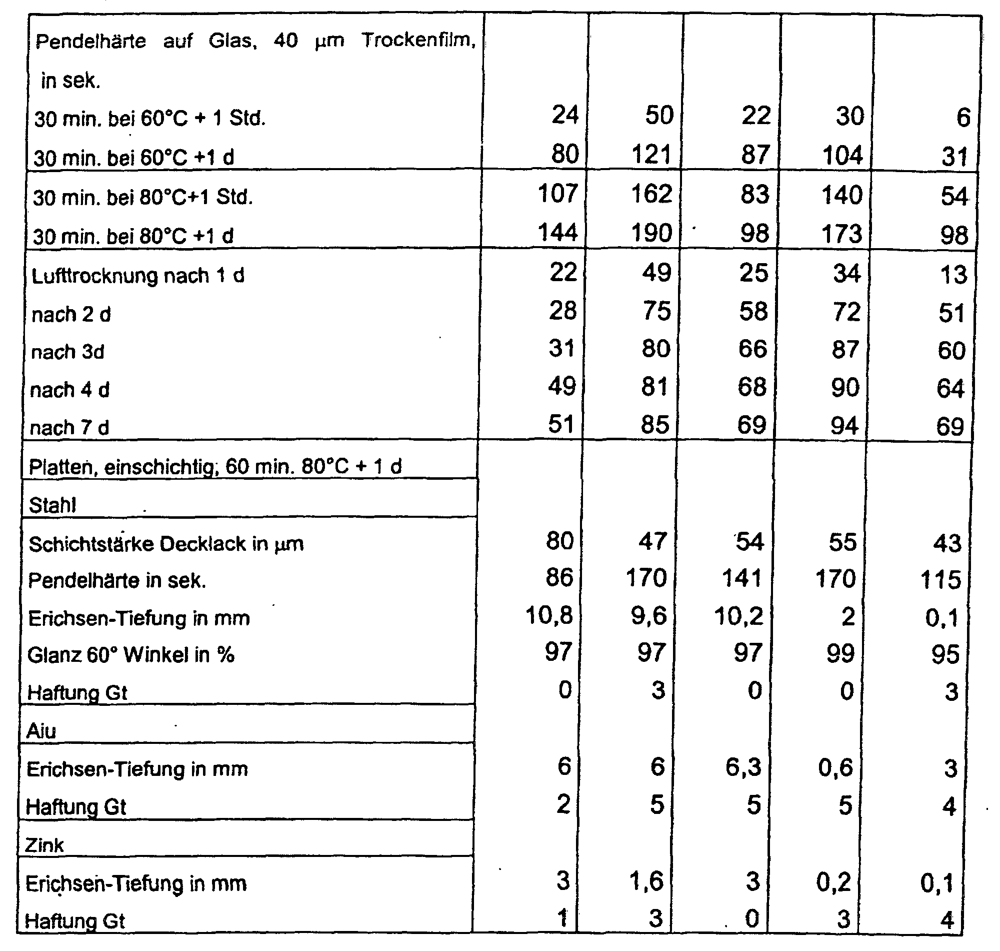

Anhand der Ergebnisse der vorstehend aufgeführten Beispiellacke in Tabelle IX ist der nichtflüchtige Anteil gegenüber konventionellen Lacksystemen um 10 bis 20% höher und somit deutlich umweltschonender.

Desweiteren sind Beispiele für den Vergleich der Reaktivitäten und Verträglichkeiten von 2-Komponenten Klarlacken, die im Holzlackbereich geprüft werden, auf Basis der erfindungsgemäßen Bindemittel in Tabelle X aufgeführt:

Verwendung des erfindungsgemäßen Bindemittels 4.7. Vergleichsbindemittel ist ein gutes handelssübliches Acrylat-Copolymerisat mit der Bezeichnung Synthalat® A-075 55%ig in Xylol/Butylacetat (1:4) gelöst, für den gleichen Zweck.

**Tabelle X:**

| | Vergleich Synthalat A-075 | Bindemittel 4.7 |
|---|---|---|
| Bindemittel | 83,00 | 70,00 |
| Desmodur N 75% | 20,00 | 13,00 |
| Butylacetat | 54,00 | 50,00 |
| Topfzeit in sek. Sofort | 18 | 18 |
| nach 4 Stunden | 18 | 19 |
| nach 8 Stunden | 19 | 19 |
| nach 24 Stunden | 22 | 22 |
| Pendelhärte auf Glas, 200 µm Naßfilm, in sek. | | |
| 30 min. bei 60°C+1 h | 34 | 68 |
| 30 min. bei 60°C + 1 d | 70 | 123 |
| 30 min. bei 80°C+1 h | 100 | 131 |
| 30 min. bei 80°C + 1 d | 141 | 178 |
| Lufttrocknung nach 1 d | 44 | 103 |
| nach 2 d | 85 | 182 |
| nach 3d | 111 | 185 |
| nach 4 d | 127 | 180 |
| nach 7 d | 146 | 182 |
| Verträglichkeiten, 100% vemetzt mit Desmodur® HL Lösung | | |
| | trübe | klar |
| Naßfilm 150 µm | klar | klar |
| Trockenfilm | klar | klar |
| Verträglichkeiten, Harz + CAB 1:1 fest auf fest | | |
| CAB 551-0,01 20%ig Buac (Lösung) | klar | klar |
| CAB 551 -0,01 20%ig Buac (Naßfilm) | klar | klar |
| CAB 551-0,01 20%ig Buac (Trockenfilm) | trübe | trübe |
| CAB 381-0,1 20%ig Buac (Lösung) | klar | klar |
| CAB 381-0,1 20%ig Buac (Naßfilm) | klar | klar |
| CAB 381 -0,1 20%ig Buac (Trockenfilm) | trübe | klar |
| CAB 381 -0,5 20%ig Buac (Lösung) | opal | klar |
| CAB 381-0,5 20%ig Buac (Naßfilm) | opal | klar |
| CAB 381-0,5 20%ig Buac (Trockenfilm) | trübe | klar |
| CAB 381 -2,0 15%ig Buac (Lösung) | opal | klar |
| CAB 381-2,0 15%ig Buac (Naßfilm) | trübe | klar |
| CAB 381 -2,0 15%ig Buac (Trockenfilm) | milchig | klar |

Überraschenderweise ist in Tabelle X die sehr gute Verträglichkeit des Bindemittels 4.7 mit schnellertrocknenden Reagenzien wie Desmodur HL und CAB die in der Möbellackbranche als Zusatzmittel Verwendung finden, zu erkennen. Außerdem erreicht man mit dem Bindemittel 4.7 eine sehr schnelle Anfangstrocknung von 103 sek. nach 1 Tag und die Endhärte des Lackfilmes bereits nach 2 Tagen. Mit diesem Bindemittel beschichtete Möbel sind somit schneller stapelfähig. Dies ist ein enormer Kosten- und Zeitvorteil gegenüber handelsüblichen Bindemitteln.

### Legende:

| | | |
|---|---|---|
| Verdünnung Bd 1316= | EPA= Ethoxypropylacetat | 25 |
| | Buac= Butylacetat | 25 |
| | SSA= Shellsol A | 20 |
| | Xylol | 25 |
| | Butoxyl | 5 |

EEP= Ethyl-3-ethoxypropionat, CH50AL= 1.1. Di (tert. -Butylperoxy)cyclohexan, BP75W= Dibenzoylperoxid, DTBP= Di. tert.-Butylperoxid, TBPEH Tert.Butylper-2-ethylhexanoat, DTAP= Di.tert.-Amylperoxid. CAB= Celluloseacetobutyrat.

## Patentansprüche

1. Bindemittel auf Polyester-Acrylatbasis
- mit Hydroxylzahlen im Bereich von 40 bis 300 mg KOH/g Festharz und
- Säurezahlen im Bereich von 3 bis 20 mg KOH/g Festharz,
aufgebaut aus
**A.** 10 bis 90 Gew.-% Polyester mit Hydroxylzahlen zwischen 80 bis 300 mg KOH/g Festharz und Säurezahlen zwischen 5 bis 30 mg KOH/g Festharz und berechneten Molmassen von 500 bis 15000, aufgebaut aus Umsetzungsprodukten von
**a.1)** 5 bis 50 Mol.-% Neopentylglykol,
**a.2)** 5 bis 45 Mol.-% Trimethylolpropan,
**a.3)** 10 bis 51,5 Mol.-% Hexahydrophthalsäure und/oder Methylhexahydrophthalsäure und/oder deren Anhydrid(en),
**a.4)** 0,5 bis 32 Mol.-% Phthalsäure und/oder deren Anhydrid,
**a.5)** 0 bis 18 Mol.-% anderen Alkandiolen aus der Gruppe, 1,2-(1,3-, 1,4-)Butandiol, 1,5-Pentandiol, 1,6-Hexandiol, Cyclohexan-1,4-dimethanol, Hydroxypivalinsäureneopentylester, Cyclohexandiol, Trimethylpentandiol, Ethylbutylpropandiol, Ethylenglykol, Diethylenglykol, Triethylenglykol, 1,2-Propylenglykol, Dipropylenglykol, Hexylenglykol, einzeln oder im Gemisch,
**a.6)** 0 bis 18 Mol.-% anderen Dicarbonsäuren und/oder Hydroxydicarbonsäuren und/oder deren Anhydrid(en) und/oder aus der Gruppe 5-Hydroxyisophthalsäure, Isophthalsäure, Terephthalsäure, Halogensäuren, wie Tetrachlor- bzw. Tetrabromphthalsäure, Tetrahydrophthalsäure, 1,2-Cyclohexandicarbonsäure, 1 ,4-Cyclohexandicarbonsäure, 4-Methylhexahydrophthalsäure, Endomethylentetrahydrophthalsäure, Tricyclodecan-Dicarbonsäure, Endoethylenhexahydrophthalsäure, Camphersäure (1,2,2,-Trimethylcyclopentan-1,3-dicarbonsäure), Adipinsäure, Bernsteinsäure, Azelainsäure, Sebacinsäure, Glutarsäure, einzeln oder im Gemisch,
**a.7)** 0 bis 16 Mol.-% Monocarbonsäuren oder/und Hydroxycarbonsäuren aus der Gruppe Benzoesäure, para-tert.-Butylbenzoesäure, Laurinsäure, Isononansäure, 2,2-Dimethylpropionsäure, 2-Ethylhexansäure, Capronsäure, Caprylsäure, Caprinsäure, Versaticsäure, Hexahydrobenzoesäure, Hydroxypivalinsäure, 3-(4-)Hydroxybenzoesäure, 2-Hydroxyisobuttersäure, 2-(3-,4-,2-)Hydroxy-3-(4-,3-,4-)methoxybenzoesäure, 2-(3-)Hydroxy-4-(4-)methylbenzoesäure, 2-(3-,4-)Hydrophenylaceticsäure, 2-Hydroxy-2-phenylpropionsäure, 3-(4-)Hydroxy-3-(3-)phenylpropionsäure, einzeln oder im Gemisch,
**a.8)** 0 bis 14 Mol.-% aliphatischen und/oder cycloaliphatischen Monoalkoholen, wobei die Monoalkohole 4 bis 18 C-Atome besitzen, einzeln oder im Gemisch,
wobei die sich unter a.1), a.2), a.3) und a.4), gegebenenfalls a.5), a.6), a.7) und/oder a.8) angegebenen Mol.-% Angaben jeweils zu 100 Mol.-% ergänzen, und
**B.** 90 bis 10 Gew.-% Acrylatharz aus
**b.1)** 5 bis 55 Gew.-% Hydroxyalkyl(meth)acrylat mit 2 bis 5 C-Atomen im Hydroxyalkylrest, einzeln oder im Gemisch,
**b.2)** 0 bis 80 Gew.-% aromatischen Vinylverbindungen, einzeln oder im Gemisch,
**b.3)** 0 bis 95 Gew.-% Alkyl(meth)acrylaten mit 1 bis 9 C-Atomen im Alkylrest, einzeln oder im Gemisch,
**b.4)** 0 bis 6 Gew.-% (Meth)acrylsäure, einzeln oder im Gemisch,
wobei sich b.1) gegebenenfalls b.2), b.3) und/oder b.4) sich zu 100 Gew.-% ergänzen und die Bindemittel durch Polymerisation der die Acrylatkomponente bildenden Monomere in Anwesenheit der Polyesterkomponente hergestellt werden.

2. Bindemittel auf Polyester-Acrylatbasis nach Anspruch 1, aufgebaut aus
**A.** 10 bis 90 Gew.-% Polyester mit Hydroxylzahlen von 80 bis 260 mg KOH/g Festharz, Säurezahlen von 8 bis 25 mg KOH/g Festharz und stöchiometrisch errechneten Molmassen von 580 bis 8000, aufgebaut aus Umsetzungsprodukten von
**a.1)** 10 bis 47 Mol.-% Neopentylglykol,
**a.2)** 5 bis 42 Mol.-% Trimethylolpropan,
**a.3)** 32 bis 50 Mol.-% Hexahydrophthalsäure und/oder Methylhexahydrophthalsäure oder deren Anhydrid(en),
**a.4)** 1 bis 20 Mol.-% Phthalsäure und/oder deren Anhydrid,
wobei sich unter a.1), a.2), a.3) und a.4) angegebenen Mol.-% Angaben jeweils zu 100 Mol.-% ergänzen, und
B. 90 bis 10 Gew.-% Acrylatharz gemäß Anspruch 1 Teil B.

3. Bindemittel auf Polyester-Acrylatbasis nach Anspruch 1 oder 2 aufgebaut aus
**A.** 10 bis 90 Gew.-% Polyester mit Hydroxylzahlen von 80 bis 255 mg KOH/g Festharz, Säurezahlen von 9 bis 24 mg KOH/g Festharz und stöchiometrisch errechneten Molmassen von 600 bis 7000, aufgebaut aus Umsetzungsprodukten von
**a.1)** 12 bis 46 Mol.-% Neopentylglykol,
**a.2)** 5 bis 40 Mol.-% Trimethylolpropan,
**a.3)** 35 bis 49 Mol.-% Hexahydrophthalsäure und/oder Methylhexahydrophthalsäure oder deren Anhydrid(en),
**a.4)** 2 bis 15 Mol.-% Phthalsäure und/oder deren Anhydrid,
wobei sich unter a.1), a.2), a.3) und a.4) angegebenen Mol.-% Angaben jeweils zu 100 Mol.-% ergänzen, und
B. 90 bis 10 Gew.-% Acrylatharz gemäß Anspruch 1 Teil B.

4. Bindemittel auf Polyester-Acrylatbasis
- mit Hydroxylzahlen im Bereich von 40 bis 300 mg KOH/g Festharz und
- Säurezahlen im Bereich von 3 bis 20 mg KOH/g Festharz,
aufgebaut aus
**A.** 10 bis 90 Gew.-% Polyester aus
**a.1)** 5 bis 63 Mol.-% Neopentylglykol,
**a.2)** größer 0 bis 45 Mol.-% Trimethylolpropan,
**a.3)** 15 bis 52 Mol.-% Hexahydrophthalsäure und/oder Methylhexahydrophthalsäure und/oder deren Anhydrid(en),
**a.4)** 0 bis 32 Mol.-% Phthalsäure und/oder deren Anhydrid,
**a.5)** 0 bis 18 Mol.-% anderen Alkandiolen aus der Gruppe, 1,2-(1,3-, 1,4-) Butandiol, 1,5-Pentandiol, 1,6-Hexandiol, Cyclohexan-1,4-dimethanol, Hydroxypivalinsäureneopentylester, Cyclohexandiol, Trimethylpentandiol, Ethylbutylpropandiol, Ethylenglykol, Diethylenglykol, Triethylenglykol, 1,2-Propylenglykol, Dipropylenglykol, Hexylenglykol, einzeln oder im Gemisch,
**a.6)** 0 bis 32 Mol.-% anderen Dicarbonsäuren und/oder Hydroxydicarbonsäuren und/oder deren Anhydrid(en) und/oder aus der Gruppe 5-Hydroxyisophthalsäure, Isophthalsäure, Terephthalsäure, Halogensäuren, wie Tetrachlor- bzw. Tetrabromphthalsäure, Tetrahydrophthalsäure, 1,2-Cyclohexandicarbonsäure, 1 ,4-Cyclohexandicarbonsäure, 4-Methylhexahydrophthalsäure, Endomethylentetrahydrophthalsäure, Tricyclodecan-Dicarbonsäure, Endoethylenhexahydrophthalsäure, Camphersäure (1,2,2-Trimethylcyclopentan-1,3-dicarbonsäure), Adipinsäure, Bernsteinsäure, Azelainsäure, Sebacinsäure, Glutarsäure, einzeln oder im Gemisch,
**a.7)** 0 bis 16 Mol.-% Monocarbonsäuren oder/und Hydroxycarbonsäuren aus der Gruppe Benzoesäure, p. tert.-Butylbenzoesäure, Laurinsäure, Isononansäure, 2,2-Dimethylpropionsäure, 2-Ethylhexansäure, Capronsäure, Caprylsäure, Caprinsäure, Versaticsäure, Hexahydrobenzoesäure, Hydroxypivalinsäure, 3-(4-) Hydroxybenzoesäure, 2-Hydroxyisobuttersäure, 2-(3-,4-,2-)Hydroxy-3-(4-,3-,4-) methoxybenzoesäure, 2-(3-)Hydroxy-4-(4-)methylbenzoesäure, 2-(3-,4-) Hydrophenylaceticsäure, 2-Hydroxy-2-phenylpropionsäure, 3-(4-)Hydroxy-3-(3-)phenylpropionsäure, einzeln oder im Gemisch,
**a.8)** 0 bis 14 Mol.-% aliphatischen und/oder cycloaliphatischen Monoalkoholen, wobei die Monoalkohole 4 bis 18 C-Atome besitzen, einzeln oder im Gemisch,
wobei sich die unter a.1), a.2) und a.3), gegebenenfalls a.4), a.5), a.6), a.7) und/oder a.8) angegebenen Mol.-% Angaben jeweils zu 100 Mol.-% ergänzen, und
**B.** 90 bis 10 Gew.-% Acrylatharz gemäß Anspruch 1 Teil B und
die Bindemittel durch Polymerisation der die Acrylatkomponente bildenden Monomere in Anwesenheit der Polyesterkomponente hergestellt werden.

5. Bindemittel auf Polyester-Acrylatbasis nach Anspruch 4, aufgebaut aus
**A.** 10 bis 90 Gew.-% Polyester mit Hydroxylzahlen von 80 bis 300 mg KOH/g Festharz und Säurezahlen von 5 bis 30 mg KOH/g Festharz und stöchiometrisch errechneten Molmassen von 500 bis 15000, aufgebaut aus Umsetzungsprodukten von:
**a.1)** 5 bis 50 Mol.-% Neopentylglykol,
**a.2)** 5 bis 45 Mol.-% Trimethylolpropan,
**a.3)** 20 bis 51,5 Mol.-% Hexahydrophthalsäure und/oder Methylhexahydrophthalsäure und/oder deren Anhydrid(en), **a.6)** 0,5 bis 32 Mol.-% Isophthalsäure,
wobei sich die unter a.1), a.2), a.3) und a.6) angegebenen Mol.-% Angaben jeweils zu 100 Mol.-% ergänzen, und
**B.** 90 bis 10 Gew.-% Acrylatharz gemäß Anspruch 1 Teil B.

6. Verfahren zur Herstellung eines Bindemittels auf Polyester-Acrylatbasis nach einem der Ansprüche 1 bis 5, indem der Polyester A und organisches, inertes Lösungsmittel mit einem Siedepunkt von mindestens 120°C auf 120 bis 210°C erhitzt wird, dann im Verlaufe von 2 bis 12 Stunden das Monomerengemisch und Initiator oder Initiatorengemische gleichmäßig zudosiert werden und nach beendeter Zugabe der Ansatz 2 bis 6 Stunden im gleichen Temperaturbereich nachpolymerisiert wird.

7. Verwendung der Bindemittel nach einem der Ansprüche 1 bis 5, gegebenenfalls in Abmischung mit anderen organischen Polyhydroxyverbindungen als Bindemittelkomponenten für Zweikomponenten-Polyurethanlacke, die Lackpolyisocyanate sowie gegebenenfalls die in der Polyurethanlacktechnologie üblichen Hilfsund Zusatzmittel enthalten, bei der Herstellung von Lacküberzügen auf Metallen, Hölzern, Papieren, Pappen sowie Kunststoffformteilen.

8. Verwendung gemäß Anspruch 7, wobei es sich bei den mit Lacküberzügen zu versehenden Kunststoffformteilen um solche handelt, wie sie im Automobilbau Verwendung finden.

9. Verwendung der Bindemittel nach einem der Ansprüche 1 bis 5 in Reaktionslacken zur Herstellung von Überzügen oder Grundierungen, wobei die Reaktionslacke durch Mischen von
(A) Bindemittel,
(B) gegebenenfalls anderen organischen Polyhydroxyverbindungen,
(C) Polyisocyanaten als Vernetzungsmittel und Härter,
(D) inerten organischen Lösungsmitteln und gegebenenfalls
(E) weiteren in Reaktionslacken üblichen Zusätzen,
erhältlich sind.

10. Verwendung der Bindemittel nach einem der Ansprüche 1 bis 5 zur Herstellung von Überzügen oder Grundierungen durch Auftragen eines Lackes oder Grundierung auf Basis von hydroxylgruppentragenden Verbindungen, Poyisocyanaten, inerten organischen Lösungsmitteln sowie gegebenenfalls üblichen Zusätzen auf einen Träger und Aushärten bei Raumtemperatur oder erhöhter Temperatur bis 120°C.

11. Polyester mit Hydroxylzahlen von 70 bis 280 mg KOH/g Festharz, Säurezahlen von 6 bis 28 mg KOH/g Festharz und stöchiometrisch errechneten Molmassen von 500 bis 15000, aufgebaut aus Umsetzungsprodukten von
**a.1)** 8 bis 50 Mol.-% Neopentylglykol,
**a.2)** 5 bis 44 Mol.-% Trimethylolpropan,
**a.3)** 25 bis 51 Mol.-% Hexahydrophthalsäure und/oder Methylhexahydrophthalsäure oder deren Anhydrid (en),
**a.4)** 1 bis 30 Mol.-% Phthalsäure und/oder deren Anhydrid,
wobei sich die unter a.1), a.2), a.3) und a.4) angegebenen Mol.-% Angaben jeweils zu 100 Mol.-% ergänzen.

12. Polyester, mit Hydroxylzahlen von 80 bis 300 mg KOH/g Festharz und Säurezahlen von 5 bis 30 mg KOH/g Festharz und stöchiometrisch errechneten Molmassen von 500 bis 15000, aufgebaut aus Umsetzungsprodukten von:
**a.1)** 5 bis 50 Mol.-% Neopentylglykol,
**a.2)** 5 bis 45 Mol.-% Trimethylolpropan,
**a.3)** 20 bis 51,5 Mol.-% Hexahydrophthalsäure und/oder Methylhexahydrophthalsäure und/oder deren Anhydrid(en),
**a.6)** 0,5 bis 32 Mol.-% Isophthalsäure,
wobei sich die unter a.1), a.2), a.3) und a.6) angegebenen Mol.-% Angaben jeweils zu 100 Mol.-% ergänzen.

## Claims

1. A binder on the basis of polyester acrylate
- with hydroxyl numbers in the range of 40 to 300 mg KOH/g solid resin and
- acid numbers in the range of 3 to 20 mg KOH/g solid resin,
composed of
**A.** 10 to 90 percent by weight of polyester with hydroxyl numbers between 80 to 300 mg KOH/g solid resin and acid numbers between 5 to 30 mg KOH/g solid resin and calculated molar weights of 500 to 15,000, composed of reaction products of
**a.1)** 5 to 50 mol% of neopentyl glycol,
**a.2)** 5 to 45 mol% of trimethylolpropane,
**a.3)** 10 to 51.5 mol% of hexahydrophthalic acid and/or methylhexahydrophthalic acid and/or their anhydride(s),
**a.4)** 0.5 to 32 mol% of phthalic acid and/or its anhydride,
**a.5)** 0 to 18 mol% of other alkanediols from the group including 1,2-(1,3-, 1,4-)butanediol, 1,5-pentanediol, 1,6-hexanediol, cyclohexane-1,4-dimethanol, hydroxypivalic acid neopentyl ester, cyclohexanediol, trimethylpentanediol, ethylbutylpropanediol, ethylene glycol, diethylene glycol, triethylene glycol, 1,2-propylene glycol, dipropylene glycol, hexylene glycol, individually or in a mixture,
**a.6)** 0 to 18 mol% of other dicarboxylic acids and/or hydroxydicarboxylic acids and/or their anhydride(s) and/or from the group including 5-hydroxyisophthalic acid, isophthalic acid, terephthalic acid, halogen acids such as tetrachloro- or tetrabromophthalic acid, tetrahydrophthalic acid, 1,2-cyclohexanedicarboxylic acid, 1,4-cyclohexanedicarboxylic acid, 4-methylhexahydrophthalic acid, endomethylenetetrahydrophthalic acid, tricyclodecane-dicarboxylic acid, endoethylenehexahydrophthalic acid, camphoric acid (1,2,2-trimethylcyclopentane-1,3-dicarboxylic acid), adipinic acid, succinic acid, azelaic acid, sebacic acid, glutaric acid, individually or in a mixture,
**a.7)** 0 to 16 mol% of monocarboxylic acids or/and hydroxycarboxylic acids from the group including benzoic acid, para-tert-butylbenzoic acid, lauric acid, isononanoic acid, 2,2-dimethylpropionic acid, 2-ethylhexanoic acid, caproic acid, caprylic acid, capric acid, versatic acid, hexahydrobenzoic acid, hydroxypivalic acid, 3-(4-)hydroxybenzoic acid, 2-hydroxyisobutyric acid, 2-,(3-,4-,2-)hydroxy-3-(4-,3-,4)-methoxybenzoic acid, 2-(3-)hydroxy-4-(4-)methylbenzoic acid, 2-(3-,4-)hydrophenylacetic acid, 2-hydroxy-2-phenylpropionic acid, 3-(4-)hydroxy-3-(3-)phenylpropionic acid, individually or in a mixture,
**a.8)** 0 to 14 mol% of aliphatic and/or cycloaliphatic monoalcohols, whereby the monoalcohols have 4 to 18 C-atoms, individually or in a mixture,
whereby the under a.1), a.2), a.3), and a.4), where applicable a.5), a.6), a.7), and/or a.8), specified mol%-data in each case add to 100 mol%, and
**B.** 90 to 10 percent by weight of acrylate resin from
**b.1)** 5 to 55 percent by weight of hydroxyalkyl (meth)acrylate with 2 to 5 C-atoms in the hydroxyalkyl residue, individually or in a mixture,
**b.2)** 0 to 80 percent by weight of aromatic vinyl compounds, individually or in a mixture,
**b.3)** 0 to 95 percent by weight of alkyl (meth)acrylates with 1 to 9 C-atoms in the alkyl residue, individually or in a mixture,
**b.4)** 0.0 to 6 percent by weight of (meth)acrylic acid, individually or in a mixture,
whereby b.1), where applicable b.2), b.3), and/or b.4) add to 100 percent by weight and the binders are produced through polymerization of the monomers which constitute the acrylate component in the presence of the polyester component.

2. The binder on the basis of polyester acrylate according to claim 1, composed of
**A.** 10 to 90 percent by weight of polyester with hydroxyl numbers of 80 to 260 mg KOH/g solid resin, acid numbers of 8 to 25 mg KOH/g solid resin and stoichiometrically calculated molar weights of 580 to 8,000, composed of reaction products of
**a.1)** 10 to 47 mol% of neopentyl glycol,
**a.2)** 5 to 42 mol% of trimethylolpropane,
**a.3)** 32 to 50 mol% of hexahydrophthalic acid and/or methylhexahydrophthalic acid or their anhydride(s),
**a.4)** 1 to 20 mol% of phthalic acid and/or its anhydride,
whereby the under a.1), a.2), a.3), and a.4) specified mol%-data in each case add to 100 mol%, and
**B.** 90 to 10 percent by weight of acrylate resin according to claim 1 part B.

3. The binder on the basis of polyester acrylate according to claim 1 or claim 2, composed of
**A.** 10 to 90 percent by weight of polyester with hydroxyl numbers of 80 to 255 mg KOH/g solid resin, acid numbers of 9 to 24 mg KOH/g solid resin and stoichiometrically calculated molar weights of 600 to 7,000, composed of reaction products of
**a.1)** 12 to 46 mol% of neopentyl glycol,
**a.2)** 5 to 40 mol% of trimethylolpropane,
**a.3)** 35 to 49 mol% of hexahydrophthalic acid and/or methylhexahydrophthalic acid or their anhydride(s),
**a.4)** 2 to 15 mol% of phthalic acid and/or its anhydride,
whereby the under a.1), a.2), a.3), and a.4) specified mol%-data in each case add to 100 mol%, and
**B.** 90 to 10 percent by weight of acrylate resin according to claim 1 part B.

4. The binder on the basis of polyester acrylate
- with hydroxyl numbers in the range of 40 to 300 mg KOH/g solid resin and
- acid numbers in the range of 3 to 20 mg KOH/g solid resin,
composed of
**A.** 10 to 90 percent by weight of polyester from
**a.1)** 5 to 63 mol% of neopentylglycol,
**a.2)** greater than 0 to 45 mol% of trimethylolpropane,
**a.3)** 15 to 52 mol% of hexahydrophthalic acid and/or methylhexahydrophthalic acid and/or their anhydride(s),
**a.4)** 0 to 32 mol% of phthalic acid and/or its anhydride,
**a.5)** 0 to 18 mol% of other alkanediols from the group including 1,2-(1,3-, 1,4-)butanediol, 1,5-pentanediol, 1,6-hexanediol, cyclohexane-1,4-dimethanol, hydroxypivalic acid neopentyl ester, cyclohexanediol, trimethylpentanediol, ethylbutylpropanediol, ethylene glycol, diethylene glycol, triethylene glycol, 1,2-propylene glycol, dipropylene glycol, hexylene glycol, individually or in a mixture,
**a.6)** 0 to 32 mol% of other dicarboxylic acids and/or hydroxydicarboxylic acids and/or their anhydride(s) and/or from the group including 5-hydroxyisophthalic acid, isophthalic acid, terephthalic acid, halogen acids such as tetrachloro- or tetrabromophthalic acid, tetrahydrophthalic acid, 1,2-cyclohexanedicarboxylic acid, 1,4-cyclohexanedicarboxylic acid, 4-methylhexahydrophthalic acid, endomethylenetetrahydrophthalic acid, tricyclodecane-dicarboxylic acid, endoethylenehexahydrophthalic acid, camphoric acid (1,2,2-trimethylcyclopentane-1,3-dicarboxylic acid), adipinic acid, succinic acid, azelaic acid, sebacic acid, glutaric acid, individually or in a mixture,
**a.7)** 0 to 16 mol% of monocarboxylic acids or/and hydroxycarboxylic acids from the group including benzoic acid, p-tert-butylbenzoic acid, lauric acid, isononanoic acid, 2,2-dimethylpropionic acid, 2-ethylhexanoic acid, caproic acid, caprylic acid, capric acid, versatic acid, hexahydrobenzoic acid, hydroxypivalic acid, 3-(4-)hydroxybenzoic acid, 2-hydroxyisobutyric acid, 2-,(3-,4-,2-)hydroxy-3-(4-,3-,4-)methoxybenzoic acid, 2-(3-)hydroxy-4-(4-)methylbenzoic acid, 2-(3-,4-)hydrophenylacetic acid, 2-hydroxy-2-phenylpropionic acid, 3-(4-)hydroxy-3-(3-)phenylpropionic acid, individually or in a mixture, **a.8)** 0 to 14 mol% of aliphatic and/or cycloaliphatic monoalcohols, whereby the monoalcohols have 4 to 18 C-atoms, individually or in a mixture,
whereby the under a.1), a.2), and a.3), where applicable a.4), a.5), a.6), a.7), and/or a.8), specified mol%-data in each case add to 100 mol%, and
**B.** 90 to 10 percent by weight of acrylate resin according to claim 1 part B and the binders are produced through polymerization of the monomers that constitute the acrylate component in the presence of the polyester component.

5. The binder on the basis of polyester acrylate according to claim 4, composed of
**A.** 10 to 90 percent by weight of polyester with hydroxyl numbers of 80 to 300 mg KOH/g solid resin and acid numbers of 5 to 30 mg KOH/g solid resin and stoichiometrically calculated molar weights of 500 to 15,000 composed of reaction products of:
**a.1)** 5 to 50 mol% of neopentyl glycol,
**a.2)** 5 to 45 mol% of trimethylolpropane,
**a.3)** 20 to 51.5 mol% of hexahydrophthalic acid and/or methylhexahydrophthalic acid and/or their anhydride(s),
**a.6)** 0.5 to 32 mol% of isophthalic acid,
whereby the under a.1), a.2), a.3), and a.6) specified mol%-data in each case add to 100 mol%, and
**B.** 90 to 10 percent by weight of acrylate resin according to claim 1 part B.

6. A method for the production of a binder on the basis of polyester acrylate according to one of the claims 1 through 5 by heating of the polyester A and organic, inert solvent with a boiling point of at least 120 °C to 120 to 210 °C, then evenly incorporating the monomer mixture and initiator or initiator mixtures over the course of 2 to 12 hours and, after completion of the addition, post-polymerizing of the formulation for 2 to 6 hours in the same temperature range.

7. The use of the binders according to one of the claims 1 through 5, where appropriate, in a mixture with other organic polyhydroxy compounds as binder components for two-component polyurethane lacquers which comprise lacquer polyisocyanates as well as, where appropriate, the auxiliary agents and additives that are common in the polyurethane lacquer technology, in the production of lacquer coatings onto metals, lumbers, papers, cardboards, as well as plastic moldings.

8. The use according to claim 7, whereby the plastic moldings that are to be provided with lacquer coatings concern the kind that is used in automotive engineering.

9. The use of the binders according to one of the claims 1 through 5 in reaction lacquers for the production of coatings or primary coats, whereby the reaction lacquers are obtainable by mixing of
(A) binder,
(B) where appropriate other organic polyhydroxy compounds
(C) polyisocyanates as cross-linking agents and curing agents,
(D) inert organic solvents and where appropriate
(E) other additives customary in reaction lacquers.

10. The use of the binders according to one of the claims 1 through 5 for the production of coatings or primary coats by applying of a lacquer or primary coat on the basis of hydroxylgroup carrying compounds, polyisocyanates, inert organic solvents as well as, where appropriate, customary additives onto a substrate and curing at room temperature or elevated temperature up to 120 °C.

11. A polyester with hydroxyl numbers of 70 to 280 mg KOH/g solid resin, acid numbers of 6 to 28 mg KOH/g solid resin, and stoichiometrically calculated molar weights of 500 to 15,000, composed of reaction products of
**a.1)** 8 to 50 mol% of neopentyl glycol,
**a.2)** 5 to 44 mol% of trimethylolpropane,
**a.3)** 25 to 51 mol% of hexahydrophthalic acid and/or methylhexahydrophthalic acid or their anhydride(s),
**a.4)** 1 to 30 mol% of phthalic acid and/or its anhydride,
whereby the under a.1), a.2), a.3) and a.4) specified mol%-data in each case add to 100%.

12. The polyester with hydroxyl numbers of 80 to 300 mg KOH/g solid resin and acid numbers of 5 to 30 mg KOH/g solid resin and stoichiometrically calculated molar weights of 500 to 15,000, composed of reaction products of
**a.1)** 5 to 50 mol% of neopentyl glycol,
**a.2)** 5 to 45 mol% of trimethylolpropane,
**a.3)** 20 to 51.5 mol% of hexahydrophthalic acid and/or methylhexahydrophthalic acid and/or their anhydride(s),
**a.6)** 0.5 to 32 mol% of isophthalic acid,
whereby the under a.1), a.2), a.3) and a.6) specified mol%-data in each case add to 100%.

## Revendications

1. Liants à base de polyester et d'acrylate
- présentant des indices d'hydroxyle situés dans une plage de 40 à 300 mg KOH/g de résine solide et
- des indices d'acide situés dans une plage de 3 à 20 mg KOH/g de résine solide,
composés de
**A.** 10 à 90 % en poids de polyester présentant des indices d'hydroxyle situés entre 80 et 300 mg KOH/g de résine solide et des indices d'acide entre 5 jusqu'à 30 mg KOH/g de résine solide et des masses molaires calculées de 500 à 15 000, se composant de produits de conversion issus de
**a.1)** 5 à 50 % en mole de néopentylglycol
**a.2)** 5 à 45 % en mole de triméthylolpropane
**a.3)** 10 à 51,5 % en mole d'acide hexahydrophtalique et/ou d'acide méthylhexahydrophtalique et/ou de son (leurs) anhydride(s),
**a.4)** 0,5 à 32 % en mole d'acide phtalique et/ou de son anhydride,
**a.5)** 0 à 18 % en mole d' autres alcanediols issus du groupe 1,2-(1,3-, 1,4-)butanediol, 1,5-pentanediol, 1,6-hexanediol, cyclohexane-1,4-diméthanol, ester néopentylique d'acide hydroxypivalique, cyclohexanediol, triméthylpentanediol, éthylbutylpropanediol, éthylèneglycol, diéthylèneglycol, triéthylèneglycol, 1,2-propylèneglycol, dipropylèneglycol, hexylèneglycol, seuls ou en mélange,
**a.6)** 0 à 18 % en mole d'autres acides dicarboxyliques et/ou d'acides hydroxydicarboxyliques et/ou de leurs anhydrides et/ou provenant du groupe acide 5-hydroxyisophtalique, acide isophtalique, acide téréphtalique, acides halogéniques tels que l'acide tétrachlorique ou l'acide tétrabromophtalique, acide tétrahydrophtalique, acide 1,2-cyclohexanedicarboxylique, acide 1,4-cyclohexanedicarboxylique, acide 4-méthylhexahydrophtalique, acide endométhylènetétrahydrophtalique, acide tricyclodécanedicarboxylique, acide endoéthylènehexahydrophtalique, acide camphorique (acide 1,2,2-triméthylcyclopentane-1,3-dicarboxylique), acide adipique, acide succinique, acide azélaique, acide sébacique, acide glutarique, seuls ou en mélange,
**a.7)** 0 à 16 % en mole d'acides monocarboxyliques et/ou d'acides hydroxycarboxyliques provenant du groupe acide benzoïque, acide para-tert-butylbenzoïque, acide laurique, acide isononanoïque, acide 2,2-diméthylpropionique, acide 2-éthylhexanoïque, acide caproïque, acide caprylique, acide caprique, acide versatique, acide hexahydrobenzoïque, acide hydroxypivalique, acide 3-(4-)hydroxybenzoïque, acide 2-hydroxyisobutyrique, acide 2-(3-,4-,2-)hydroxy-3-(4-,3-,4-)méthoxybenzoïque, acide 2-(3-)hydroxy-4-(4-)méthylbenzoïque, acide 2-(3-,4-)hydrophénylacétique, acide 2-hydroxy-2-phénylpropionique, acide 3-(4-)hydroxy-3-(3-)phénylpropionique, seuls ou en mélange
**a.8)** 0 à 14 % en mole de monoalcools aliphatiques et/ou cycloaliphatiques, les monoalcools possédant à chaque fois 4 à 18 atomes de carbone, seuls ou en mélange,
les données en pourcentage molaire indiquées sous a.1), a.2), a.3), et a.4) le cas échéant a.5), a.6), a.7) et/ou a.8) se complétant à chaque fois pour donner 100 % en mole, et de
**B.** 90 à 10 % en poids de résine d'acrylate se composant de
**b.1)** 5 à 55 % en poids d'hydroxyalkyl(méth)acrylate avec 2 à 5 atomes de carbone dans le radical hydroxyalkyle, seul ou en mélange,
**b.2)** 0 à 80 % en poids de composés vinyliques aromatiques, seuls ou en mélange,
**b.3)** 0 à 95 % en poids d'alkyl(méth)acrylates avec 1 à 9 atomes de carbone dans le radical alkyle, seuls ou en mélange
**b.4)** 0 à 6 % en poids d'acide (méth)acrylique, seul ou en mélange,
b.1) et le cas échéant b.2), b.3) et/ou b.4) se complétant pour donner 100 % en poids et les liants étant fabriqués par polymérisation des monomères formant le composant acrylate en présence du composant polyester.

2. Liants à base de polyester et d'acrylate selon la revendication 1, se composant de
**A.** 10 à 90 % en poids de polyester présentant des indices d'hydroxyle de 80 à 260 mg KOH/g de résine solide, des indices d'acide de 8 à 25 mg KOH/g de résine solide et des masses molaires calculées de façon stoechiométrique de 580 à 8 000, composé de produits de conversion de
**a.1)** 10 à 47 % en mole de néopentylglycol,
**a.2)** 5 à 42 % en mole de triméthylolpropane,
**a.3)** 32 à 50 % en mole d'acide hexahydrophtalique et/ou d'acide méthylhexahydrophtalique ou de son (leurs) anhydride(s),
**a.4)** 1 à 20 % en mole d'acide phtalique et/ou de son anhydride,
les données en pourcentage molaire indiquées sous a.1), a.2), a.3) et a.4) se complétant à chaque fois pour donner 100 % en mole, et de
**B.** 90 à 10 % en poids de résine d'acrylate selon la revendication 1 partie B.

3. Liants à base de polyester et d'acrylate selon la revendication 1 ou 2, se composant de
**A.** 10 à 90 % en poids de polyester présentant des indices d'hydroxyle de 80 à 255 mg KOH/g de résine solide, des indices d'acide de 9 à 24 mg KOH/g de résine solide et des masses molaires calculées de façon stoechiométrique de 600 à 7 000, composé de produits de conversion de
**a.1)** 12 à 46 % en mole de néopentylglycol,
**a.2)** 5 à 40 % en mole de triméthylolpropane,
**a.3)** 35 à 49 % en mole d'acide hexahydrophtalique et/ou d'acide méthylhexahydrophtalique ou de son (leurs) anhydride(s),
**a.4)** 2 à 15 % en mole d'acide phtalique et/ou de son anhydride,
les données en pourcentage molaire indiquées sous a.1), a.2), a.3) et a.4) se complétant à chaque fois pour donner 100 % en mole, et de
**B.** 90 à 10 % en poids de résine d'acrylate selon la revendication 1 partie B.

4. Liants à base de polyester et d'acrylate
- présentant des indices d'hydroxyle situés dans une plage de 40 à 300 mg KOH/g de résine solide et
- des indices d'acide situés dans une plage de 3 à 20 mg KOH/g de résine solide,
composés de
**A.** 10 à 90 % en poids de polyester issu de
**a.1)** 5 à 63 % en mole de néopentylglycol
**a.2)** 0 à 45 % en mole de triméthylolpropane
**a.3)** 15 à 52 % en mole d'acide hexahydrophtalique et/ou d'acide méthylhexahydrophtalique et/ou de son (leurs) anhydride(s),
**a.4)** 0 à 32 % en mole d'acide phtalique et/ou de son anhydride
**a.5)** 0 à 18 % en mole d' autres alcanediols issus du groupe 1,2-(1,3-, 1,4-)butanediol, 1,5-pentanediol, 1,6-hexanediol, cyclohexane-1,4-diméthanol, ester néopentylique d'acide hydroxypivalique, cyclohexanediol, triméthylpentanediol, éthylbutylpropanediol, éthylèneglycol, diéthylèneglycol, triéthylèneglycol, 1,2-propylèneglycol, dipropylèneglycol, hexylèneglycol, seuls ou en mélange
**a.6)** 0 à 32 % en mole d'autres acides dicarboxyliques et/ou d'acides hydroxydicarboxyliques et/ou de leurs anhydrides et/ou provenant du groupe acide 5-hydroxyisophtalique, acide isophtalique, acide téréphtalique, acide halogéniques tels que l'acide tétrachlorique ou l'acide tétrabromophtalique, acide tétrahydrophtalique, acide 1,2-cyclohexanedicarboxylique, acide 1,4-cyclohexanedicarboxylique, acide 4-méthylhexahydrophtalique, acide endométhylènetétrahydrophtalique, acide tricyclodécanedicarboxylique, acide endoéthylènehexahydrophtalique, acide camphorique (acide 1,2,2-triméthylcyclopentane-1,3-dicarboxylique), acide adipique, acide succinique, acide azélaique, acide sébacique, acide glutarique, seuls ou en mélange,
**a.7)** 0 à 16 % en mole d'acides monocarboxyliiques et/ou d'acides hydroxycarboxyliques provenant du groupe acide benzoïque, acide para-tert-butylbenzoïque, acide laurique, acide isononanoïque, acide 2,2-diméthylpropionique, acide 2-éthylhexanoïque, acide capronique, acide caprylique, acide caprique, acide versatique, acide hexahydrobenzoïque, acide hydroxypivalique, acide 3-(4-)hydroxybenzoïque, acide 2-hydroxyisobutyrique, acide 2-(3-,4-,2-)hydroxy-3-(4-,3-,4-)méthoxybenzoïque, acide 2-(3-)hydroxy-4-(4-)méthylbenzoïque, acide 2-(3-,4-)hydrophénylacétique, acide 2-hydroxy-2-phénylpropionique, acide 3-(4-)hydroxy-3-(3-)phénylpropionique, seuls ou en mélange
**a.8)** 0 à 14 % en mole de monoalcools aliphatiques et/ou cycloaliphatiques, les monoalcools possédant à chaque fois 4 à 18 atomes de carbone, seuls ou en mélange,
les données en pourcentage molaire indiquées sous a.1), a.2), et a.3), le cas échéant a.4), a.5), a.6), a.7) et/ou a.8) se complétant à chaque fois pour donner 100 % en mole, et de
**B.** 90 à 10 % en poids de résine d'acrylate selon la revendication 1 partie B, et
les liants étant fabriqués par polymérisation des monomères formant le composant acrylate en présence du composant polyester.

5. Liants à base de polyester et d'acrylate selon la revendication 4, se composant de
**A.** 10 à 90 % en poids de polyester présentant des indices d'hydroxyle de 80 à 300 mg KOH/g de résine solide, des indices d'acide de 5 à 30 mg KOH/g de résine solide et des masses molaire calculées de façon stoechiométrique de 500 à 15 000, composé de produits de conversion de
**a.1)** 5 à 50 % en mole de néopentylglycol,
**a.2)** 5 à 45 % en mole de triméthylolpropane,
**a.3)** 20 à 51,5 % en mole d'acide hexahydrophtalique et/ou d'acide méthylhexahydrophtalique ou de son (leurs) anhydride(s),
**a.6)** 0,5 à 32 % en mole d'acide isophtalique ,
les données en pourcentage molaire indiquées sous a.1), a.2), a.3) et a.6) se complétant à chaque fois pour donner 100 % en mole, et de
**B.** 90 à 10 % en poids de résine d'acrylate selon la revendication 1 partie B.

6. Procédé pour la fabrication d'un liant à base de polyester et d'acrylate selon l'une quelconque des revendications 1 à 5, dans lequel le polyester A et un solvant inerte organique présentant un point d'ébullition d'au moins 120 °C, sont chauffés à 120 jusqu'à 210 °C, ensuite pendant 2 à 12 heures le mélange de monomères et l'amorceur ou le mélange d'amorceurs sont ajoutés par dosage régulier et à la fin de l'ajout de la préparation le mélange est polymérisé pendant 2 à 6 heures dans la même plage de températures.

7. Utilisation des liants selon l'une quelconque des revendications 1 à 5, le cas échéant en mélange avec d'autres composés polyhydroxylés organiques comme composants de liant pour des peintures en polyuréthane à deux composants qui contiennent des polyisocyanates de peinture ainsi que le cas échéant les adjuvants et additifs usuels dans la technologie des peintures en polyuréthane, lors de la production de revêtements de peinture sur des métaux, des bois, des papiers, des cartons ainsi que sur des pièces moulées en matière synthétique.

8. Utilisation selon la revendication 7, dans laquelle s'agit dans le cas des pièces moulées en matière synthétique à munir d'un revêtement de peinture, de pièces telles que celles que l'on utilise dans le secteur de l'industrie automobile.

9. Utilisation des liants selon l'une quelconque des revendications 1 à 5 dans des peintures réactionnelles pour la production de revêtements ou de couches de fond, dans laquelle les peintures réactionnelles peuvent être obtenues par mélange
(A) d'un liant,
(B) le cas échéant d'autres composés polyhydroxylés organiques,
(C) de polyisocyanates comme agents de réticulation et comme durcisseurs,
(D) de solvants organiques inertes et le cas échéant
(E) d' autres additifs usuels dans les peintures réactionnelles.

10. Utilisation des liants selon l'une quelconque des revendications 1 à 5 pour la production de revêtements ou de couches de fond par application d'une peinture ou d'une couche de fond à base de composés présentant des groupes hydroxyle, de polyisocyanates, de solvants organiques inertes, ainsi que le cas échéant d'additifs usuels, sur un substrat et par durcissement à température ambiante ou à une température élevée allant jusqu'à 120 °C.

11. Polyester présentant des indices d'hydroxyle de 70 à 280 mg KOH/g de résine solide, des indices d'acide de 6 à 28 mg KOH/g de résine solide et des masses molaires calculées de façon stoechiométrique de 500 à 15 000, composé de produits de conversion de
**a.1)** 8 à 50 % en mole de néopentylglycol,
**a.2)** 5 à 44 % en mole de triméthylolpropane,
**a.3)** 25 à 51 % en mole d'acide hexahydrophtalique et/ou d'acide méthylhexahydrophtalique ou de son (leurs) anhydride(s),
**a.4)** 1 à 30 % en mole d'acide phtalique et/ou de son anhydride,
les données en pourcentage molaire indiquées sous a.1), a.2), a.3) et a.4) se complétant à chaque fois pour donner 100 % en mole.

12. Polyester présentant des indices d'hydroxyle de 80 à 300 mg KOH/g de résine solide, des indices d'acide de 5 à 30 mg KOH/g de résine solide et des masses molaires calculées de façon stoechiométrique de 500 à 15 000, composé de produits de conversion de
**a.1)** 5 à 50 % en mole de néopentylglycol,
**a.2)** 5 à 45 % en mole de triméthylolpropane,
**a.3)** 20 à 51,5 % en mole d'acide hexahydrophtalique et/ou d'acide méthylhexahydrophtalique et/ou de son (leurs) anhydride(s),
**a.6)** 0,5 à 32 % en mole d'acide isophtalique et/ou de son anhydride,
les données en pourcentage molaire indiquées sous a.1), a.2), a.3) et a.6) se complétant à chaque fois pour donner 100 % en mole.
